# EUROPEAN PATENT APPLICATION

(11) **EP 4 195 361 A1**
(43) Date of publication of application: **14.06.2023**
(21) Application number: 21852122.7
(22) Date of filing: 29.07.2021
(51) Int. Cl.: H01M 10/615

(54) **ELECTRIC PUMP FOR POWER BATTERY THERMAL MANAGEMENT SYSTEM**

(30) Priority: 07.08.2020 CN 202010790659; 18.08.2020 CN 202010833914; 18.12.2020 CN 202011503338
(71) Applicant: Guangdong Hanyu Auto Parts Co., Ltd., Guangdong 529075 (CN)
(72) Inventor: ZHANG, Daqian, Jiangmen, Guangdong 529075 (CN); ZOU, Zhi, Jiangmen, Guangdong 529075 (CN); ZHAO, Jingyu, Jiangmen, Guangdong 529075 (CN); LIANG, Yunxiao, Jiangmen, Guangdong 529075 (CN); OU, Yaohui, Jiangmen, Guangdong 529075 (CN)
(74) Representative: Murgitroyd & Company
(86) International application number: PCT/CN2021/109107
(87) International publication number: WO 2022/028298

(57) **Abstract**

The present invention discloses an electric pump for a power battery thermal management system, including a pump body; a motor mounted in the pump body; an impeller mounted in the pump body and driven by the motor; and a liquid heating device mounted in the pump body and configured to heat a liquid sucked from a suction inlet by the impeller and discharged from a discharge outlet. The liquid heating device includes a motor heating component for heating the liquid, which is configured to heat the liquid by thermal energy generated by the motor; and a heating assembly sleeving an outer side of the motor heating component, having heating and cooling functions and configured to, when a temperature is lower than a normal working temperature of a battery, perform electrothermal conversion, receive the thermal energy generated by the motor, and heat the flowing liquid by the thermal energy obtained by the electrothermal conversion and the thermal energy generated by the motor; and when the temperature approaches to or reaches the normal working temperature of the battery, cool the motor by the flowing liquid.

## Description

### Technical Field

The present invention relates to an electric pump for a power battery thermal management system, which belongs to F04D13/06, F04D29/58 or F04D29/40 based on IPC classification.

### Background Art

In a cold environment, for a power battery thermal management system in a facility such as an electric vehicle, an electric pump is usually adopted to drive an electrically-heated liquid to increase the temperature of a battery, so that its electrical performance is guaranteed. In a traditional design, the radial size of a pump body of the pump is required to be greater, the radial size of a coaxial motor may be smaller, and therefore, the pump is "T"-shaped as a whole in the axial direction; and an electric heating structure for the liquid in the pump is usually located in the pump body. Reference may be made to Chinese patent documents CN103089710B, CN101657137A and CN109154307B. In the prior art, the pump needs more use positions, and it is necessary to increase the efficiency.

Related terms and common knowledge refer to the national standard GB/T 33925.1-2017 *Liquid Pump and Installation Thereof-General Terms, Definitions, Quantities, Letter Symbols and Units-Part1: Liquid Pump,* GB/T 7021-2019 *Glossary of Terms for Centrifugal Pump,* Mechanical Engineering Manual and Electrical Engineering Manual published by Mechanical Industry Press in 1983 or 1997, Pump Theory and Technology published by Mechanical Industry Press in 2014, Modern Pump Theory and Technology published by China Aerospace Press in 2011, Pump and Fan published by China Electric Power Press in 2008 and Power Supply System for Electric Vehicle published by Chemical Industry Press in 2011.

### Summary of the Invention

The objective of the present invention is to provide an electric pump for a power battery thermal management system to increase the heating efficiency of a liquid.

According to a first implementation of the present invention, the electric pump for the power battery thermal management system provided by the present invention includes:
a pump body;
a motor mounted in the pump body;
an impeller mounted in the pump body and driven by the motor; and
a liquid heating device mounted in the pump body and configured to heat a liquid sucked from a suction inlet and discharged from a discharge outlet by the impeller;
wherein the liquid heating device includes: a motor heating component; and a heating assembly sleeving an outer side of the motor heating component and configured to, when a temperature is lower than a normal working temperature of a battery, perform electrothermal conversion, receive thermal energy generated by the motor, and heat a flowing liquid by thermal energy obtained by electrothermal conversion and the thermal energy generated by the motor; and when the temperature reaches the normal working temperature of the battery, cool the motor by the flowing liquid.

The liquid heating device in the present invention further includes a heating component adjacent to a control assembly of the heating assembly and configured to heat the flowing liquid by thermal energy generated by a high-power device of the control assembly.

Preferably, the motor heating component is a cylindrical stator assembly of the motor; and the heating assembly includes: an inner heating flow channel sleeve sleeving an outer side of a cylindrical stator; and a tubular heating element mounted on an outer side of the inner heating flow channel sleeve.

Preferably, the inner heating flow channel sleeve is provided with an inner heating flow channel space allowing a liquid to flow through; and the inner heating flow channel space is provided with a plurality of spirally-disposed inner spiral partition plates spaced between an inner wall and an outer wall of the inner heating flow channel sleeve and configured to partition the inner heating flow channel space into a plurality of segments of inner spiral heating flow channels.

Preferably, the heating assembly further includes an outer heating flow channel sleeve mounted on an outer side of the tubular heating element and provided with an outer heating flow channel space, and the outer heating flow channel space is configured to allow a liquid to pass through; wherein the outer heating flow channel sleeve serves as a part of the pump body to be mounted between a pump cover and a lower pump body.

Preferably, the outer heating flow channel space is provided with a plurality of spirally-disposed outer spiral partition plates spaced between an inner wall and an outer wall of the outer heating flow channel sleeve and configured to partition the outer heating flow channel space into a plurality of segments of outer spiral heating flow channels, wherein spiral directions of the outer spiral heating flow channels are opposite to spiral directions of the inner spiral heating flow channels.

Preferably, the tubular heating element includes: a tubular matrix; an electric heating film attached to an outer surface of the tubular matrix; and thermal conductive insulating glue covering the electric heating film, an outer side of the thermal conductive insulating glue serving as the outer side of the tubular heating element.

Preferably, the pump body includes an outer pump mantle with a pump cover and a lower pump body mounted on a bottom end of the outer pump mantle.

Preferably, the inner heating flow channel sleeve includes: a tubular matrix; and a plurality of inner spiral partition plates disposed on an outer wall of the tubular matrix; wherein outer ends of the plurality of inner spiral partition plates serve as the outer side of the inner heating flow channel sleeve to be in contact with an inner wall of the tubular heating element so that an inner heating flow channel space allowing a liquid to flow through is formed between the outer wall of the tubular matrix and the inner wall of the tubular heating element, and the inner heating flow channel space is provided with a plurality of segments of inner spiral heating flow channels partitioned by the plurality of segments of inner spiral partition plates.

Preferably, the heating assembly further includes an outer heating flow channel sleeve mounted on an outer side of the tubular heating element and including: a tubular matrix; and a plurality of outer spiral partition plates disposed on an outer wall of the tubular matrix, outer ends of the plurality of outer spiral partition plates serving as an outer side of the outer heating flow channel sleeve; wherein an outer heating flow channel space allowing a liquid to flow through is formed between the outer wall of the tubular matrix and an inner surface of the outer pump mantle, and the outer heating flow channel space is provided with a plurality of segments of outer spiral heating flow channels partitioned by the plurality of segments of outer spiral partition plates; and spiral directions of the outer spiral heating flow channels are opposite to spiral directions of the inner spiral heating flow channels.

Preferably, he tubular heating element includes: a tubular matrix, an inner wall thereof serving as an inner side of the tubular heating element to be in contact with the outer side of the inner heating flow channel sleeve; and an electric heating film attached to an outer surface of the tubular matrix, the electric heating film being surrounded by the outer heating flow channel sleeve.

Preferably, the plurality of segments of inner spiral heating flow channels and the plurality of segments of outer spiral heating flow channels intercommunicate by a communicating device so that each segment of inner spiral heating flow channel is sequentially connected in series with each segment of outer spiral heating flow channel in a staggered way to prolong a heating duration of a liquid passing through a flow channel.

Preferably, the communicating device includes: a first reversing-communicating component disposed in the pump cover and configured to communicate a first end of a first segment of inner spiral heating flow channel to the suction inlet disposed in the pump cover, communicate a first end of a last segment of outer spiral heating flow channel to the discharge outlet disposed in the pump cover of the pump, and connect first ends of other segments of inner spiral heating flow channels to first ends of other segments of outer spiral heating flow channels in a staggered way; and a second reversing-communicating component disposed on the lower pump body and configured to connect a second end of each segment of inner spiral heating flow channel to a second end of each segment of outer spiral heating flow channel.

Preferably, the plurality of segments of inner spiral heating flow channels include the first segment of inner spiral heating flow channel, a second segment of inner spiral heating flow channel and a third segment of inner spiral heating flow channel; the plurality of segments of outer spiral heating flow channels include a first segment of outer spiral heating flow channel, a second segment of outer spiral heating flow channel and a third segment of outer spiral heating flow channel; the first reversing-communicating component is disposed on an inner wall of the pump cover of the pump body and includes: a heating flow channel inlet groove configured to communicate the first end of the first segment of inner spiral heating flow channel to the suction inlet of the pump; a first reversing groove configured to connect a first end of the second segment of inner spiral heating flow channel to a first end of the first segment of outer spiral heating flow channel; a second reversing groove configured to connect a first end of the third segment of inner spiral heating flow channel to a first end of the second segment of outer spiral heating flow channel; and a heating flow channel outlet groove configured to communicate a first end of the third segment of outer spiral heating flow channel to the discharge outlet of the pump.

Preferably, the heating flow channel inlet groove and the heating flow channel outlet groove are located in the same annular area, the heating flow channel inlet groove is located on an inner side of the annular area, and the heating flow channel outlet groove is located on an outer side of the annular area.

Preferably, the second reversing-communicating component is disposed on an end of the lower pump body of the pump body and includes: a third reversing groove configured to communicate a second end of the first segment of inner spiral heating flow channel to a second end of the first segment of outer spiral heating flow channel; a fourth reversing groove configured to communicate a second end of the second segment of inner spiral heating flow channel to a second end of the second segment of outer spiral heating flow channel; and a fifth reversing groove configured to communicate a second end of the third segment of inner spiral heating flow channel to a second end of the third segment of outer spiral heating flow channel.

Preferably, the pump body includes an outer pump mantle with a pump cover and a lower pump body mounted on a bottom end of the outer pump mantle.

Preferably, the motor heating component is a tubular stator assembly of the motor; and the heating assembly includes: a heating flow channel ring mounted on an outer side of a tubular stator; and a tubular heating element mounted on an outer side of the heating flow channel ring, a heating flow channel space being formed between the heating flow channel ring and the tubular heating element; wherein the tubular heating element is located in the outer pump mantle and the lower pump body.

Preferably, the heating flow channel ring includes: a tubular matrix; a plurality of annular partition plates with a gap fixedly disposed on an outer wall of the tubular matrix and configured to partition the heating flow channel space into a plurality of layers of annular heating flow channels with gaps; and a longitudinal partition plate respectively connected to one end of each of the annular partition plates and configured to enable the gap of each of the annular partition plates to become a liquid outlet and connect the plurality of layers of annular heating flow channels end to end.

Preferably, a first layer of annular heating flow channel communicates with a suction inlet disposed in the pump cover; and a last layer of annular heating flow channel communicates with a discharge outlet disposed in the lower pump body.

According to a second implementation of the present invention, the electric pump for the power battery thermal management system provided by the present invention includes:
a pump body;
a motor mounted in the pump body and provided with a cylindrical stator;
an impeller mounted in the pump body and driven by the motor; and
a heating assembly mounted in the pump body and configured to heat a liquid sucked from a suction inlet and discharged from a discharge outlet by the impeller;
wherein the heating assembly includes: an inner heating flow channel sleeve sleeving an outer side of the cylindrical stator; and a tubular heating element mounted on an outer side of the inner heating flow channel sleeve.

Preferably, the inner heating flow channel sleeve is provided with an inner heating flow channel space allowing a liquid to flow through; and the inner heating flow channel space is provided with a plurality of spirally-disposed inner spiral partition plates spaced between an inner wall and an outer wall of the inner heating flow channel sleeve and configured to partition the inner heating flow channel space into a plurality of segments of inner spiral heating flow channels.

Preferably, the heating assembly further includes an outer heating flow channel sleeve mounted on an outer side of the tubular heating element and provided with an outer heating flow channel space, and the outer heating flow channel space is configured to allow a liquid to pass through; wherein the outer heating flow channel sleeve serves as a part of the pump body to be mounted between a pump cover and a lower pump body.

Preferably, the outer heating flow channel space is provided with a plurality of spirally-disposed outer spiral partition plates spaced between an inner wall and an outer wall of the outer heating flow channel sleeve and configured to partition the outer heating flow channel space into a plurality of segments of outer spiral heating flow channels, wherein spiral directions of the outer spiral heating flow channels are opposite to spiral directions of the inner spiral heating flow channels.

Preferably, the tubular heating element includes: a tubular matrix; an electric heating film attached to an outer surface of the tubular matrix; and thermal conductive insulating glue covering the electric heating film, an outer side of the thermal conductive insulating glue serving as the outer side of the tubular heating element.

Preferably, the pump body includes an outer pump mantle with a pump cover and a lower pump body mounted on a bottom end of the outer pump mantle.

Preferably, the inner heating flow channel sleeve includes: a tubular matrix; and a plurality of inner spiral partition plates disposed on an outer wall of the tubular matrix; wherein outer ends of the plurality of inner spiral partition plates serve as the outer side of the inner heating flow channel sleeve to be in contact with an inner wall of the tubular heating element so that an inner heating flow channel space allowing a liquid to flow through is formed between the outer wall of the tubular matrix and the inner wall of the tubular heating element, and the inner heating flow channel space is provided with a plurality of segments of inner spiral heating flow channels partitioned by the plurality of segments of inner spiral partition plates.

Preferably, the heating assembly further includes an outer heating flow channel sleeve mounted on an outer side of the tubular heating element and including: a tubular matrix; and a plurality of outer spiral partition plates disposed on an outer wall of the tubular matrix, outer ends of the plurality of outer spiral partition plates serving as an outer side of the outer heating flow channel sleeve; wherein an outer heating flow channel space allowing a liquid to flow through is formed between the outer wall of the tubular matrix and an inner surface of the outer pump mantle, and the outer heating flow channel space is provided with a plurality of segments of outer spiral heating flow channels partitioned by the plurality of segments of outer spiral partition plates; and spiral directions of the outer spiral heating flow channels are opposite to spiral directions of the inner spiral heating flow channels.

Preferably, the tubular heating element includes: a tubular matrix, an inner wall thereof serving as an inner side of the tubular heating element to be in contact with the outer side of the inner heating flow channel sleeve; and an electric heating film attached to an outer surface of the tubular matrix, the electric heating film being surrounded by the outer heating flow channel sleeve.

Preferably, the plurality of segments of inner spiral heating flow channels and the plurality of segments of outer spiral heating flow channels intercommunicate by a communicating device so that each segment of inner spiral heating flow channel is sequentially connected in series with each segment of outer spiral heating flow channel in a staggered way to prolong a heating duration of a liquid passing through a flow channel.

Preferably, the communicating device includes: a first reversing-communicating component disposed in the pump cover and configured to communicate a first end of a first segment of inner spiral heating flow channel to the suction inlet disposed in the pump cover, communicate a first end of a last segment of outer spiral heating flow channel to the discharge outlet disposed in the pump cover, of the pump, and connect first ends of other segments of inner spiral heating flow channels to first ends of other segments of outer spiral heating flow channels in a staggered way; and
a second reversing-communicating component disposed on the lower pump body and configured to connect a second end of each segment of inner spiral heating flow channel to a second end of each segment of outer spiral heating flow channel.

Preferably, the plurality of segments of inner spiral heating flow channels include the first segment of inner spiral heating flow channel, a second segment of inner spiral heating flow channel and a third segment of inner spiral heating flow channel; the plurality of segments of outer spiral heating flow channels include a first segment of outer spiral heating flow channel, a second segment of outer spiral heating flow channel and a third segment of outer spiral heating flow channel; the first reversing-communicating component is disposed on an inner wall of the pump cover of the pump body and includes: a heating flow channel inlet groove configured to communicate the first end of the first segment of inner spiral heating flow channel to the suction inlet of the pump; a first reversing groove configured to connect a first end of the second segment of inner spiral heating flow channel to a first end of the first segment of outer spiral heating flow channel; a second reversing groove configured to connect a first end of the third segment of inner spiral heating flow channel to a first end of the second segment of outer spiral heating flow channel; and a heating flow channel outlet groove configured to communicate a first end of the third segment of outer spiral heating flow channel to the discharge outlet of the pump.

Preferably, the heating flow channel inlet groove and the heating flow channel outlet groove are located in the same annular area, the heating flow channel inlet groove is located on an inner side of the annular area, and the heating flow channel outlet groove is located on an outer side of the annular area.

Preferably, the second reversing-communicating component is disposed on an end of the lower pump body of the pump body and includes: a third reversing groove configured to communicate a second end of the first segment of inner spiral heating flow channel to a second end of the first segment of outer spiral heating flow channel; a fourth reversing groove configured to communicate a second end of the second segment of inner spiral heating flow channel to a second end of the second segment of outer spiral heating flow channel; and a fifth reversing groove configured to communicate a second end of the third segment of inner spiral heating flow channel to a second end of the third segment of outer spiral heating flow channel.

According to a third implementation of the present invention, the electric pump for the power battery thermal management system provided by the present invention includes:
a pump body;
a motor mounted in the pump body and provided with a cylindrical stator;
an impeller mounted in the pump body and driven by the motor; and
a heating assembly mounted in the pump body and configured to heat a liquid sucked from a suction inlet and discharged from a discharge outlet by the impeller;
the pump body including an outer pump mantle with a pump cover and a lower pump body mounted on a bottom end of the outer pump mantle.

Preferably, the heating assembly includes: a heating flow channel ring mounted on an outer side of a tubular stator; and a tubular heating element mounted on an outer side of the heating flow channel ring, a heating flow channel space being formed between the heating flow channel ring and the tubular heating element; wherein the tubular heating element is located in the outer pump mantle and the lower pump body.

Preferably, the heating flow channel ring includes: a tubular matrix; a plurality of annular partition plates with a gap fixedly disposed on an outer wall of the tubular matrix and configured to partition the heating flow channel space into a plurality of layers of annular heating flow channels with gaps; and a longitudinal partition plate respectively connected to one end of each of the annular partition plates and configured to enable the gap of each of the annular partition plates to become a liquid outlet and connect the plurality of layers of annular heating flow channels end to end.

Preferably, a first layer of annular heating flow channel communicates with a suction inlet disposed in the pump cover; and a last layer of annular heating flow channel communicates with a discharge opening disposed in the lower pump body.

The present invention has the beneficial effects that: 1) lower ends and upper ends of the inner spiral heating flow channels and the outer spiral heating flow channels are sequentially connected end to end, in this way, the lengths of the heating flow channels are further increased, the time for heat exchange between a liquid flow and the tubular heating element is prolonged, and a heat exchange effect is improved; 2) the heating flow channel space is partitioned into the plurality of layers of annular heating flow channels by the plurality of annular partition plates, in this way, the lengths of the heating flow channels are increased, the time for heat exchange between the liquid flow and the tubular heating element is prolonged, and a heat exchange effect is improved; and 3) the liquid is heated by sufficiently utilizing heat generated when the motor and the control assembly work, so that the heating efficiency of a liquid is increased.

### Brief Description of the Drawings

Fig. 1 is a three-dimensional view of a first embodiment of an electric pump for a power battery thermal management system according to the present invention;
Fig. 2 is an exploded view of the electric pump in Fig. 1;
Fig. 3 is an exploded view of a heating assembly of the electric pump in Fig. 1;
Fig. 4 is a three-dimensional view of the heating assembly of the electric pump in Fig. 1 (in a bottom-view direction);
Fig. 5 is a bottom view of the heating assembly of the electric pump in Fig. 1;
Fig. 6 is a view of section E-E in Fig. 5;
Fig. 7 is a partial enlarged view I in Fig. 6;
Fig. 8 is a three-dimensional view of a lower pump body of the electric pump in Fig. 1;
Fig. 9 is a top view of the lower pump body of the electric pump in Fig. 1;
Fig. 10 is a schematic view of a section in Fig. 9;
Fig. 11 is a three-dimensional view of an inner water-isolating sleeve of the electric pump in Fig. 1;
Fig. 12 is a schematic view of a section of the inner water-isolating sleeve of the electric pump in Fig. 1;
Fig. 13 is a view of section D-D in Fig. 15;
Fig. 14 is a three-dimensional view of a pump cover of the electric pump in Fig. 1 (in a bottom-view direction);
Fig. 15 is a bottom view of the pump cover of the electric pump in Fig. 1;
Fig. 16 is a view of rotating section A-A in Fig. 19;
Fig. 17 is a partial enlarged view III in Fig. 16;
Fig. 18 is a partial enlarged view IV in Fig. 16;
Fig. 19 is a top view of the electric pump in Fig. 1;
Fig. 20 is a main view of a half section of the electric pump in Fig. 1;
Fig. 21 is a partial enlarged view II in Fig. 20;
Fig. 22 is a schematic exploded view of a heating and reversing groove in direction Z in Fig. 19 (in a bottom-view direction of the pump cover and top-view directions of the heating assembly and the lower pump body);

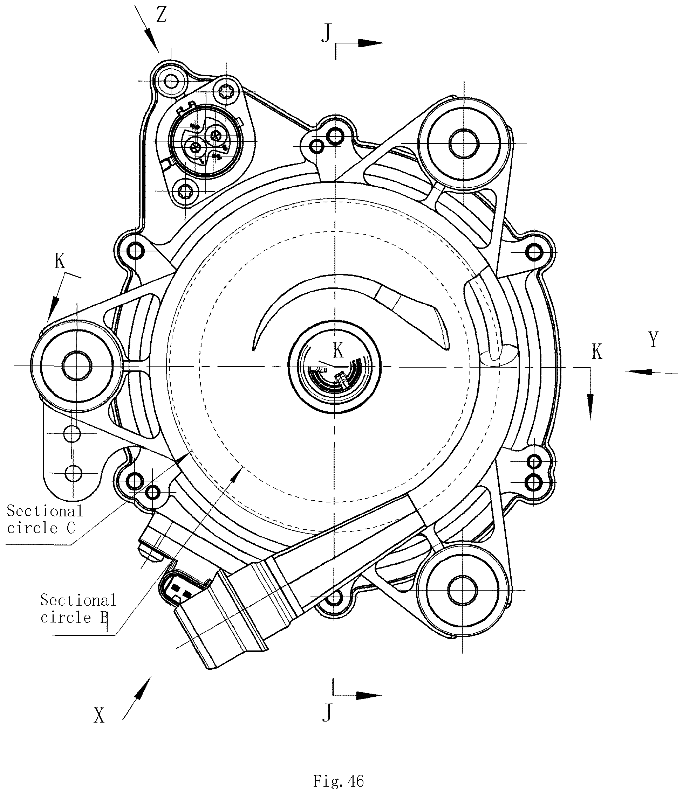

Fig. 23 is a schematic three-dimensional view of B-B and C-C flow channel sections in directions X, Y and Z in Fig. 19 (in which outer walls of inner and outer heating flow channel sleeves are removed), and Fig. 23 is also a schematic three-dimensional view of B-B and C-C flow channel sections in directions X, Y and Z in Fig. 46 (in which a tubular heating element and a peripheral wall of the pump cover are removed);
Fig. 24 is a three-dimensional view of a second embodiment of the electric pump for the power battery thermal management system according to the present invention;
Fig. 25 is a three-dimensional view of another position of the electric pump in Fig. 24;
Fig. 26 is an exploded view of the electric pump in Fig. 24;
Fig. 27 is an exploded view of the electric pump in the position in Fig. 25;
Fig. 28 is a main sectional view of the electric pump in Fig. 24;

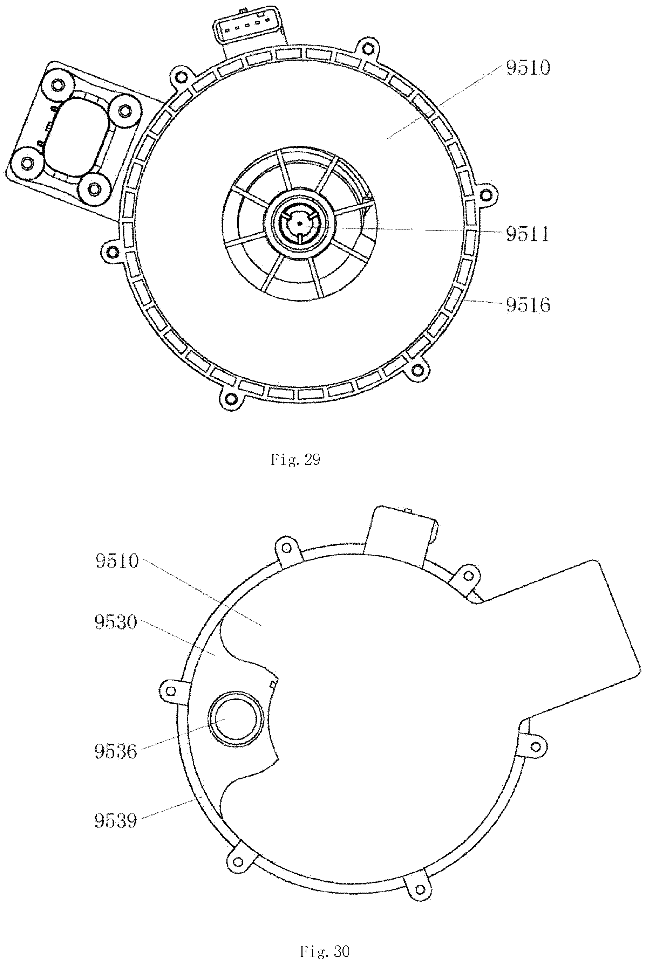

Fig. 29 is a top view of the electric pump in Fig. 24;
Fig. 30 is a bottom view of the electric pump in Fig. 24;
Fig. 31 is a schematic sectional view of the electric pump in Fig. 24 unfolded along a circumference of an annular flow channel;
Fig. 32 is a schematic three-dimensional view of a third embodiment of the electric pump for the power battery thermal management system according to the present invention;
Fig. 33 is a schematic exploded view of the electric pump in Fig. 32;
Fig. 34 is a schematic exploded view of a heating assembly of the electric pump in Fig. 32;
Fig. 35 is a schematic three-dimensional view of the heating assembly of the electric pump in Fig. 32 (in a bottom-view direction);
Fig. 36 is a schematic bottom view of the heating assembly of the electric pump in Fig. 32;
Fig. 37 is a schematic view of section F-F in Fig. 36;
Fig. 38 is a schematic view of a lower pump body of the electric pump in Fig. 32;
Fig. 39 is a top view of the lower pump body of the electric pump in Fig. 32;
Fig. 40 is a schematic view of section G-G in Fig. 39;
Fig. 41 is a schematic three-dimensional view of an inner water-isolating sleeve of the electric pump in Fig. 132;
Fig. 42 is a schematic view of a section of the inner water-isolating sleeve of the electric pump in Fig. 32;
Fig. 43 is a schematic three-dimensional view of a pump cover of the electric pump in Fig. 32 (in a bottom-view direction);
Fig. 44 is a schematic bottom view of the pump cover of the electric pump in Fig. 32;
Fig. 45 is a schematic view of section H-H in Fig. 44;
Fig. 46 is a schematic top view of the electric pump in Fig. 32;
Fig. 47 is a schematic view of section J-J in Fig. 46;
Fig. 48 is a schematic view of section K-K in Fig. 46; and
Fig. 49 is a schematic exploded view of a heating and reversing groove in direction Z in Fig. 46 (in a bottom-view direction of the pump cover and top-view directions of the heating assembly and the lower pump body).

Reference numerals in the accompanying drawings: 100 heating assembly; 110 inner heating flow channel sleeve; 111 inner wall; outer seam allowance; 112 outer wall; 113 end surface; 1131 through hole; 1132 circular truncated cone; 114 partition plate; 1141 head end; 1142 tail end; 120 tubular heating element; 121 electric heating film; 122 conducting wire; 1201 outer surface; 1202 inner hole surface; 1203 thermal conductive silicone grease; 1204 thermal conductive insulating glue; 1205 plane sealant; 130 outer heating flow channel sleeve; 131 inner wall; 132 outer wall; 1321 outer seam allowance; 133, end surface; 134 partition plate; 1341 first end; 1342 tail end; 135 flange; 1351 sealing groove; 1352 O-shaped ring; 200 impeller rotor assembly; 210 rotor; 220 impeller; 2030 motor; 300 stator assembly; 301 thermal conductive filler; 400 control assembly; 410 PCB assembly; 420 power element; 430 capacitor; 500 pump housing assembly; 510 pump cover; 511 suction inlet; 512 discharge outlet; 513 partition plate; 514 inlet; 515 outlet; 516 flange; 520 inner water-isolating sleeve; 521 rotor chamber wall; 522, outer drum; 5221 annular sealing groove; 5222 sealing ring; 530 lower pump body; 531 end surface; 5311 countersunk through hole; 5312 circular truncated cone; 532 outer wall; 5321 inner seam allowance; 533 inner wall; 5331, inner seam allowance; 534 partition plate; 540 rear cover; 600 chamber and flow channel system; 610 inner heating flow channel space; 611, 612, 613 three segments of inner heating flow channels; 620 heating chamber; 630 outer heating flow channel space; 631, 632, 633 three segments of outer heating flow channels; 650 impeller chamber; 651 suction chamber; 652 volute chamber; 653 rotor chamber; 660 stator chamber; 670 control chamber; 681, 682, 683, 691, 692 reversing groove; 8100 heating assembly; 8110 inner heating flow channel sleeve; 8111 inner wall; 8114 partition plate; 8120 tubular heating element; 8122 conducting wire; 8130 outer heating flow channel sleeve; 8131 outer wall; 8133 end surface; 8134 partition plate; 8136 wire outgoing notch; 8140 spacing ring; 8400 control assembly; 8500 pump housing assembly; 8510 pump cover; 8513 partition plate; 8517 peripheral wall; 8520 inner water-isolating sleeve; 8530 lower pump body; 8531 end surface; 8532 outer wall; 8533 inner ring; 8535 convex ring; 8534 partition plate; 8540 rear cover; 9100 heating assembly; 9110 heating flow channel ring; 9111 inner ring; 9112 annular partition plate; 9113 longitudinal partition plate; 9120 tubular heating element; 9101 rubber sealing ring; 9200 impeller rotor assembly; 9210 rotor; 9220 impeller; 92030 motor; 9300 stator assembly; 9400 control assembly; 9500 pump housing assembly; 9510 pump cover; 9511 suction inlet; 9516 flange; 9517 annular clamping groove; 9518 annular middle wall, 9530 lower pump body; 9531 rotor chamber wall; 9532 stator chamber wall; 9533 annular step; 9534 annular end surface; 9535 annular clamping groove; 9536 discharge outlet; 9537 housing; 9538 annular sealing groove; 9539 flange; 9540 rear cover; 9600 chamber and flow channel system; 9610 annular heating flow channel; 9650 impeller chamber; 9651 suction chamber; 9652 volute chamber; 9653 rotor chamber; 9660 stator chamber; and 9670 control chamber.

### Detailed Description of the Invention

In order to facilitate understanding the present invention, the present invention will be more comprehensively described below. However, the present invention may be implemented in many different forms, which are not limited to the embodiments described herein. Oppositely, these embodiments are provided for the purpose of more thoroughly and comprehensively understanding the contents disclosed by the present invention.

The term "upstream" particularly refers to a part, close to a source, of a flow channel and has no strict boundary with the source and a midstream; and the term "downstream" particularly refers to a part, close to an outlet, of the flow channel and has no strict boundary with the midstream and the outlet, referring to Chinese Word Dictionary published by Shanghai Lexicographical Publishing House in 2000.

The terms used herein are merely intended to describe specific embodiments, rather than to limit the present invention.

The present invention provides two implementations of an electric pump for a power battery thermal management system.

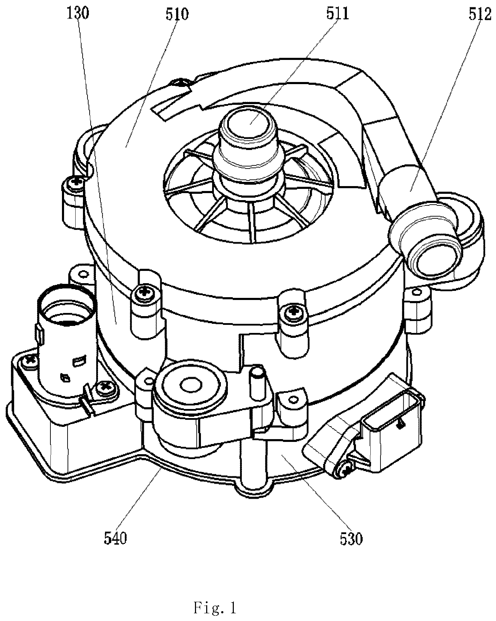

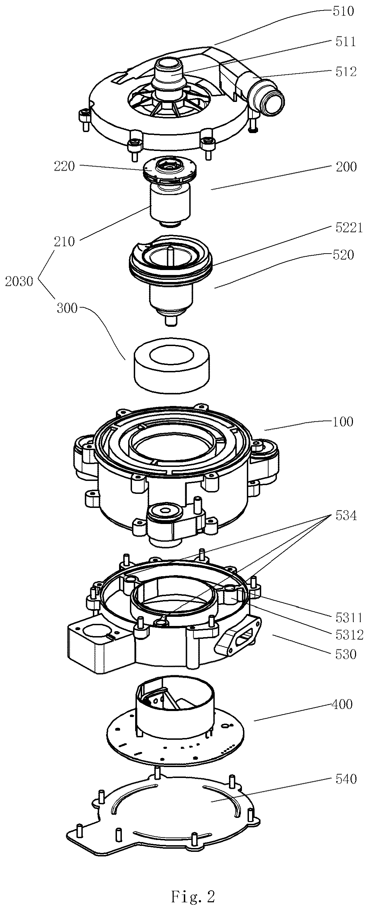

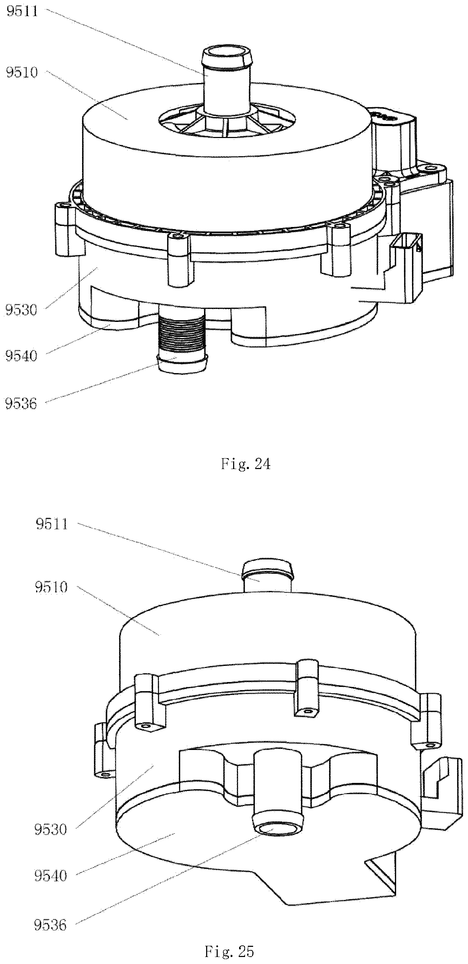

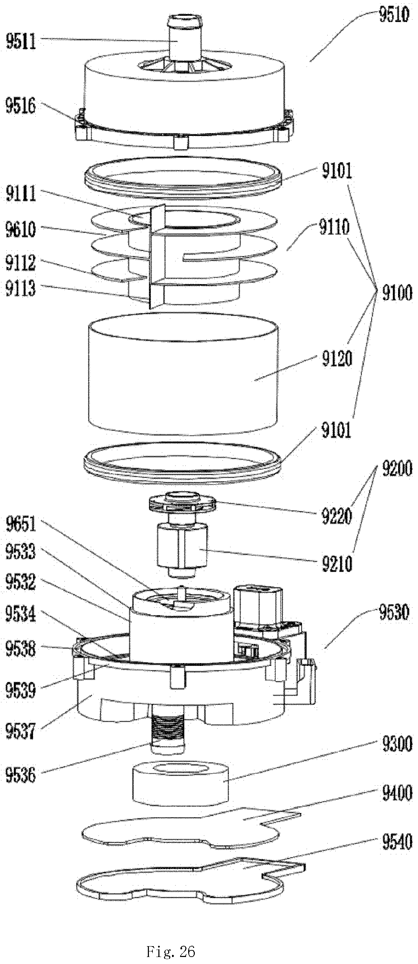

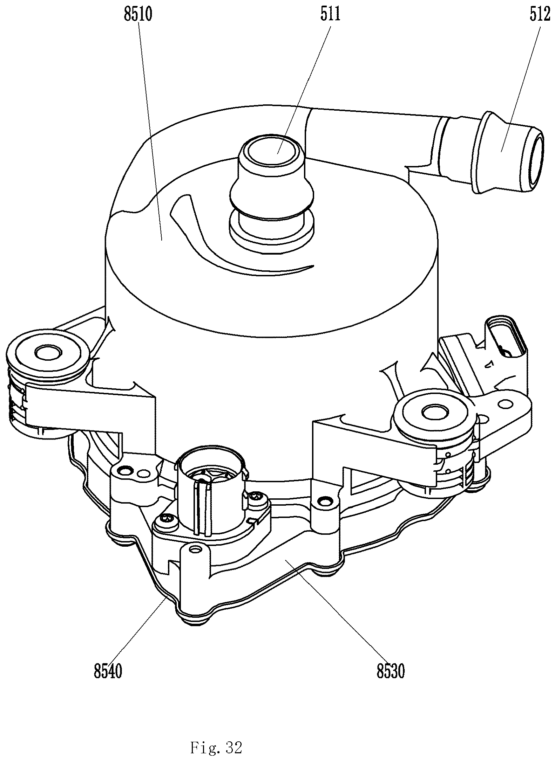

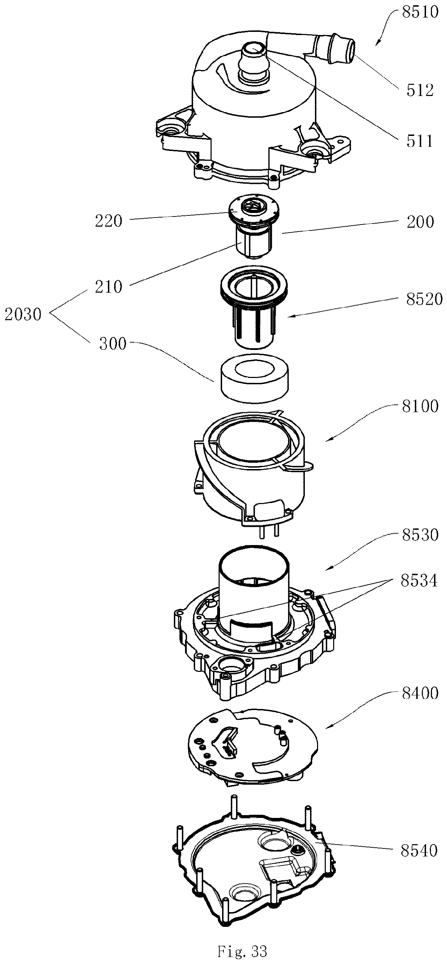

In a first implementation of the present invention, the electric pump for the power battery thermal management system includes:
a pump body, including a pump cover 510, a lower pump body 530, an outer wall of an outer heating flow channel sleeve 130 located between the pump cover 510 and the lower pump body 530, and a rear cover 540 located on a bottom of the lower pump body 530 as shown in Fig. 1; or including an outer pump mantle (i.e. a mantle-shaped housing of the electric pump) with a pump cover 9510, a lower pump body 9530 located on a bottom end of the pump mantle, and a rear cover 9540 located on a bottom end of the lower pump body 9530 as shown in Figs. 24 and 25; or including an pump mantle with a pump cover 8510, a lower pump body 8530 located on a bottom end of the pump mantle, and a rear cover 8540 located on a bottom end of the lower pump body 8530 as shown in Fig. 32;
a motor 2030 mounted in the pump body and including a rotor 210 and a stator 300 as shown in Fig. 2 and Fig. 33 or including a rotor 9210 and a stator 9300 as shown in Fig. 26;
an impeller 220 or 9220 mounted in the pump body and driven by the motor; and a liquid heating device mounted in the pump body and configured to heat a liquid sucked from a suction inlet 511 and discharged from a discharge outlet 512 by the impeller 220 or 9220;
wherein the liquid heating device includes: a motor heating component (which is generally the stator 300) with a liquid flow channel; and a heating assembly sleeved an outer side of the motor heating component and configured to, when a temperature is lower than a normal working temperature of a battery, perform electrothermal conversion, receive thermal energy generated by the motor, and heat a flowing liquid by thermal energy obtained by electrothermal conversion and the thermal energy generated by the motor; and when the temperature approaches to or reaches the normal working temperature of the battery, cool the motor by the flowing liquid.

According to the present invention, an automatic or manual way may be adopted to control the heating assembly to be converted between heating and cooling. The automatic way may be that an environmental temperature outside the battery is detected by a temperature sensor, and when the environmental temperature outside the battery is lower than the normal working temperature of the battery, the heating assembly is powered by a power manager to heat the liquid flowing through the liquid flow channel so that the temperature of the battery is raised by the heated high-temperature liquid; and when the environmental temperature outside the battery approaches to or reaches the normal working temperature of the battery, a power source of the heating assembly is turn off by the power manager, so that the low-temperature liquid flowing through the liquid flow channel takes away heat of the motor to cool the motor. The manual way is that a user manually turn on or off the power source of the heating assembly.

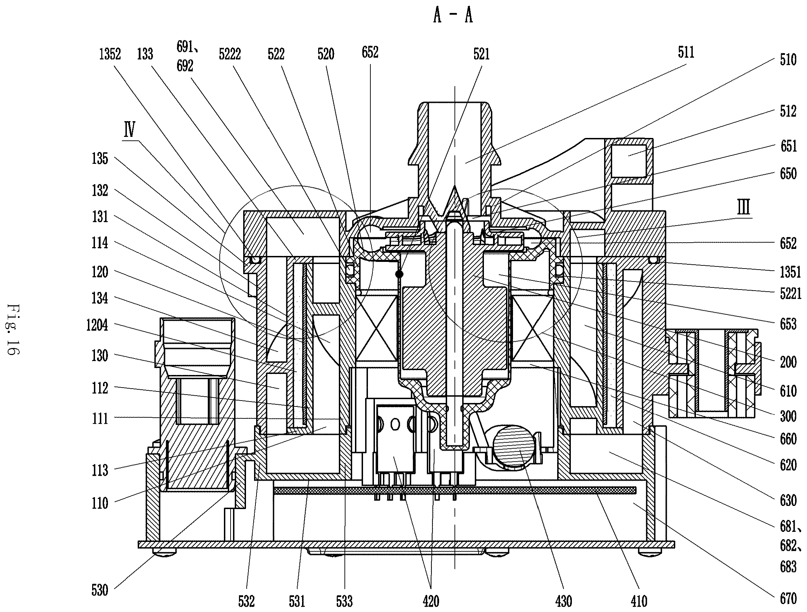

The liquid heating device in the present invention further includes a heating component (i.e. a power element 420 as shown in Fig. 16) adjacent to a control assembly 400 or 8400 of the heating assembly and configured to heat the liquid by thermal energy generated by a high-power device of the control assembly.

In a first implementation of the present invention, the liquid is heated by three heat sources, i.e. a heat source for the motor of the electric pump to generate heat, a heat source for the control assembly to generate heat and a heat source for the liquid heating assembly to generate heat, so that not only can the heating efficiency of the liquid be increased, but also the heating assembly can be controlled to cool the motor and the control assembly.

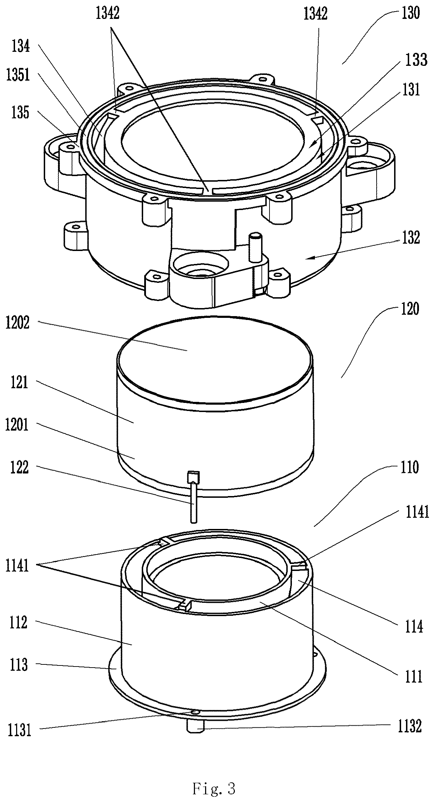

As shown in Figs. 3, 26 and 34, in the first implementation of the present invention, the motor heating component is a cylindrical stator assembly of the motor; and the heating assembly includes:
an inner heating flow channel sleeve 110 or 8110 sleeved an outer side of a cylindrical stator; and a tubular heating element 120 or 8120 mounted on an outer side of the inner heating flow channel sleeve 110 or 8110.

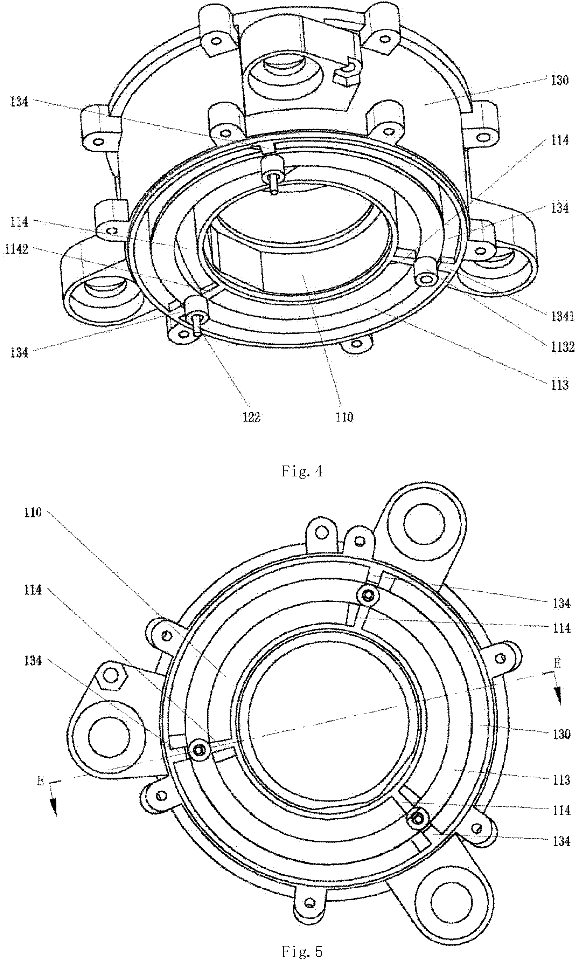

As shown in Figs. 4, 5 and 23, in the first implementation of the present invention, the inner heating flow channel sleeve 110 or 8110 or 9110 is provided with an inner heating flow channel space 610 allowing a liquid to flow through; and the inner heating flow channel space 610 is provided with a plurality of spirally-disposed partition plates 114 spaced between an inner wall 111 and an outer wall 112 of the inner heating flow channel sleeve and configured to partition the inner heating flow channel space 610 into a plurality of segments of inner spiral heating flow channels 611, 612 and 613.

As shown in Figs. 3 and 16, in the first implementation of the present invention, the heating assembly further includes an outer heating flow channel sleeve 130 mounted on an outer side of the tubular heating element 120 and provided with an outer heating flow channel space 630, and the outer heating flow channel space 630 is configured to allow a liquid to pass through.

As shown in Figs. 4, 5 and 23, in the first implementation of the present invention, the outer heating flow channel space 630 is provided with a plurality of spirally-disposed partition plates 134 spaced between an inner wall 131 and an outer wall 132 of the outer heating flow channel sleeve 130 and configured to partition the outer heating flow channel space 630 into a plurality of segments of outer spiral heating flow channels 631, 632 or 633, wherein spiral directions of the outer spiral heating flow channels 631, 632 or 633 are opposite to spiral directions of the inner spiral heating flow channels 611, 612 and 613.

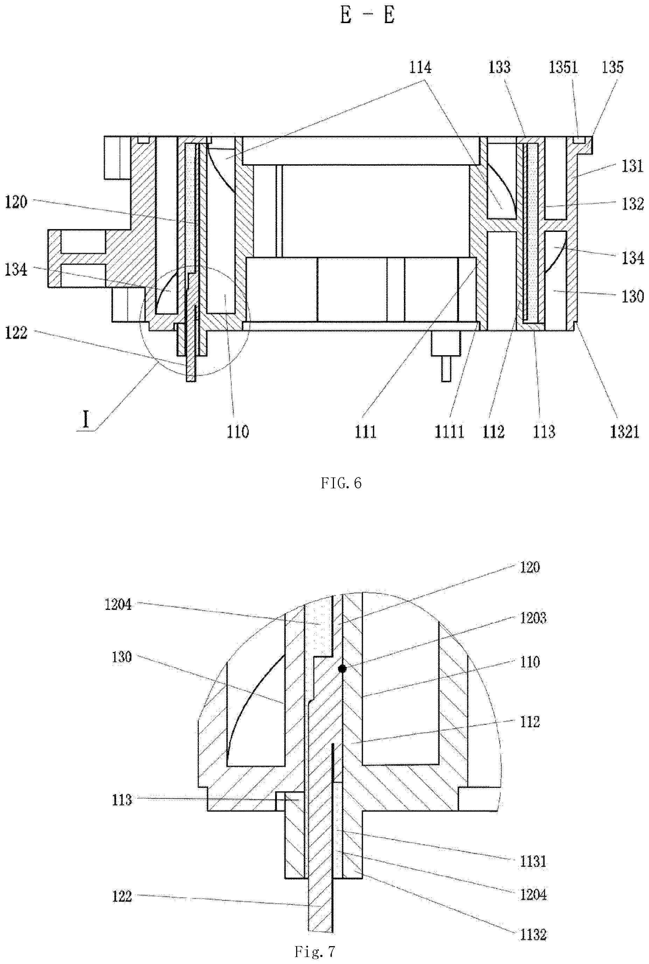

As shown in Figs. 3 and 7, in the first implementation of the present invention, the tubular heating element 120 includes: a tubular matrix; an electric heating film 121 attached to an outer surface 1201 of the tubular matrix; and thermal conductive insulating glue 1204 covering the electric heating film 121, an outer side of the thermal conductive insulating glue 1204 serving as the outer side of the tubular heating element.

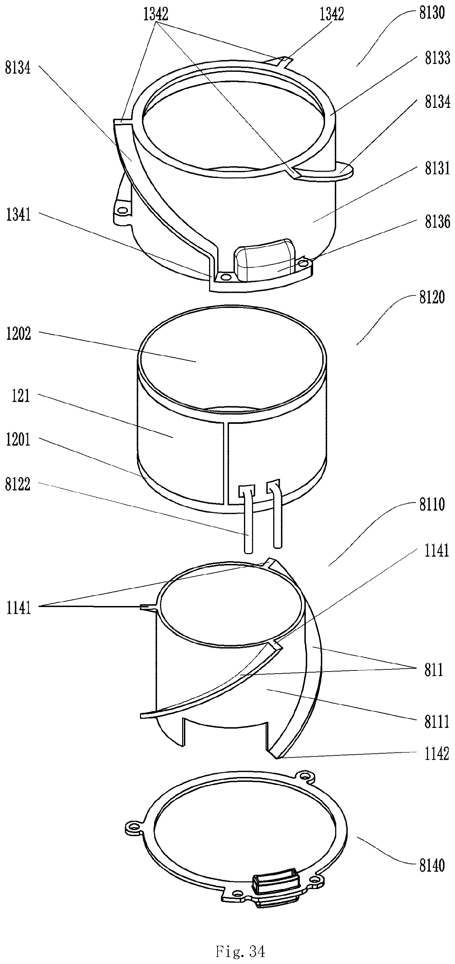

As shown in Figs. 34, 47 and 23, in the first implementation of the present invention, the inner heating flow channel sleeve 8110 includes: a tubular matrix; and a plurality of spiral partition plates 8114 disposed on an inner wall 8111 of the tubular matrix; wherein outer ends of the plurality of spiral partition plates 8114 serve as the outer side of the inner heating flow channel sleeve 8110 to be in contact with an inner wall 1202 of the tubular heating element 8120 so that an inner heating flow channel space 610 allowing a liquid to flow through is formed between the inner wall 8111 of the tubular matrix and the inner wall 1202 of the tubular heating element 8120, and the inner heating flow channel space 610 is provided with a plurality of segments of inner spiral heating flow channels 611, 612 and 613 partitioned by the plurality of segments of spiral partition plates 8114.

As shown in Figs. 34, 47 and 23, in the first implementation of the present invention, the heating assembly further includes an outer heating flow channel sleeve 8130 mounted on an outer side of the tubular heating element 8120. The outer heating flow channel sleeve 8130 includes a tubular matrix; and a plurality of spiral partition plates 8134 disposed on an outer wall 8131 of the tubular matrix, outer ends of the plurality of outer spiral partition plates 8134 serving as an outer side of the outer heating flow channel sleeve 8130; wherein an outer heating flow channel space 630 allowing a liquid to flow through is formed between the outer wall 8131 of the tubular matrix and an inner surface of the outer pump mantle, and the outer heating flow channel space 630 is provided with a plurality of segments of outer spiral heating flow channels 631, 632 and 633 partitioned by the plurality of segments of spiral partition plates 8134; and spiral directions of the outer spiral heating flow channels 631, 632 and 633 are opposite to spiral directions of the inner spiral heating flow channels 611, 612 and 613.

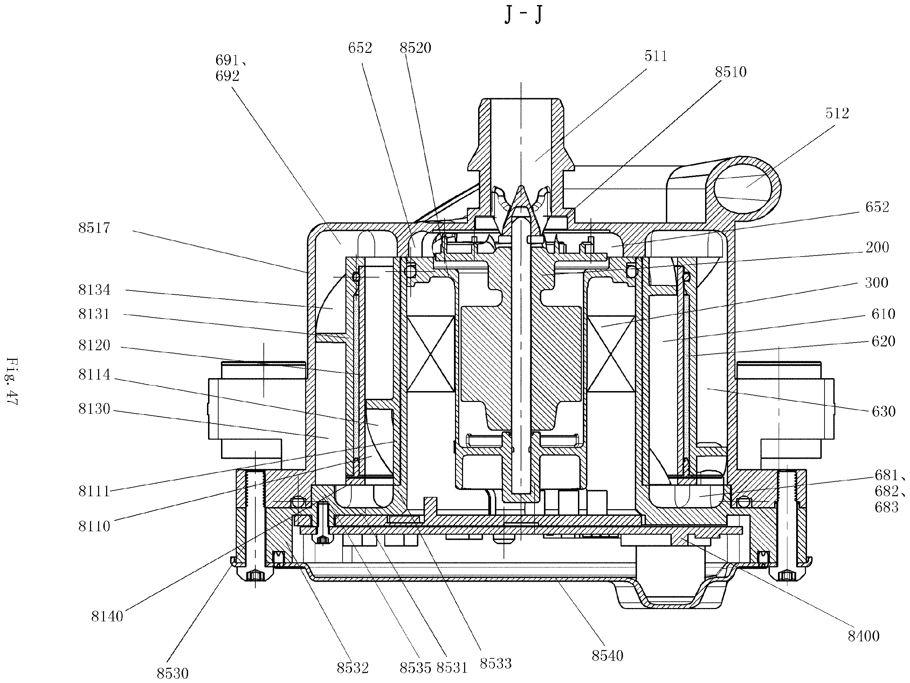

As shown in Figs. 34 and 47, in the first implementation of the present invention, the tubular heating element 8120 includes: a tubular matrix, an inner wall 1202 thereof serving as an inner side of the tubular heating element 8120 to be in contact with the outer side of the inner heating flow channel sleeve 8110; and an electric heating film 121 attached to an outer surface 1201 of the tubular matrix, the electric heating film 121 being surrounded by the outer heating flow channel sleeve 8130.

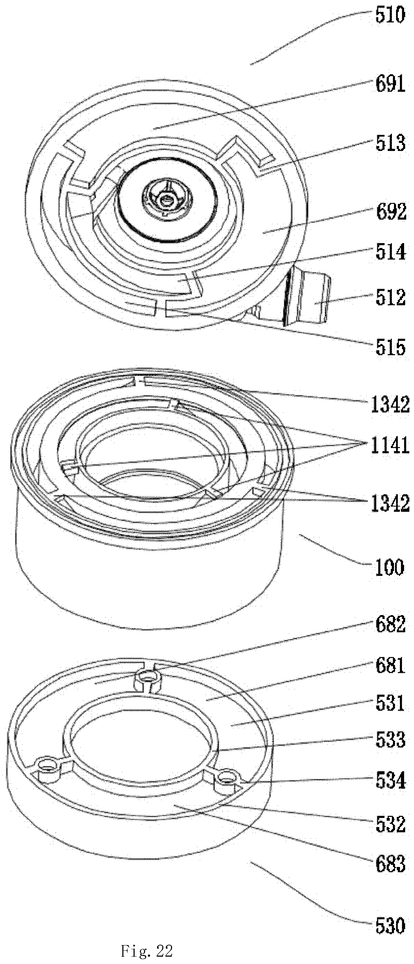

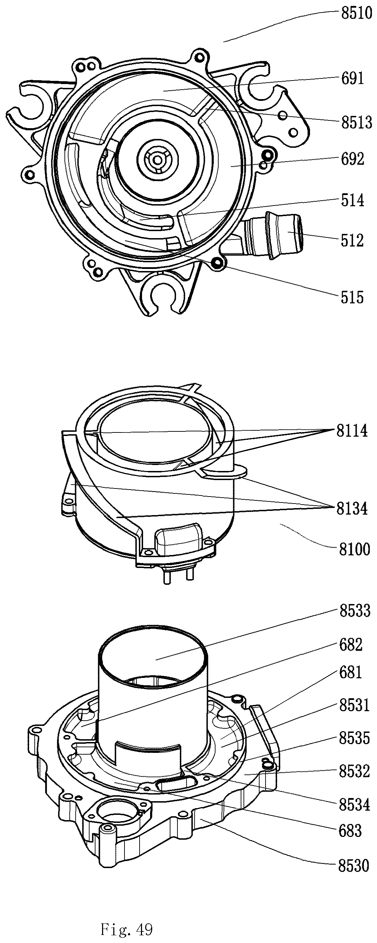

As shown in Figs. 22 and 49, in the first implementation of the present invention, the plurality of segments of inner spiral heating flow channels 611, 612 and 613 and the plurality of segments of outer spiral heating flow channels 631, 632 and 633 intercommunicate by a communicating device or a connecting device so that each segment of inner spiral heating flow channel 611, 612 and 613 is sequentially connected in series with each segment of outer spiral heating flow channel 631, 632 and 633 in a staggered way to increase a heating path of the liquid flowing through the flow channel, so that a liquid heating path is increased by about 2N times under the condition that the volume of the tubular heating element is unchanged.

For example, under the condition that the number of the inner heating flow channels and the outer heating flow channels is N, compared with the prior art in which the liquid directly passes through the heating assembly, the present invention has the advantage that the liquid heating path is increased by about 2×N=2N times. The increase of the liquid heating path means the prolonging of a heating duration of the liquid, and thus, the heating efficiency is increased.

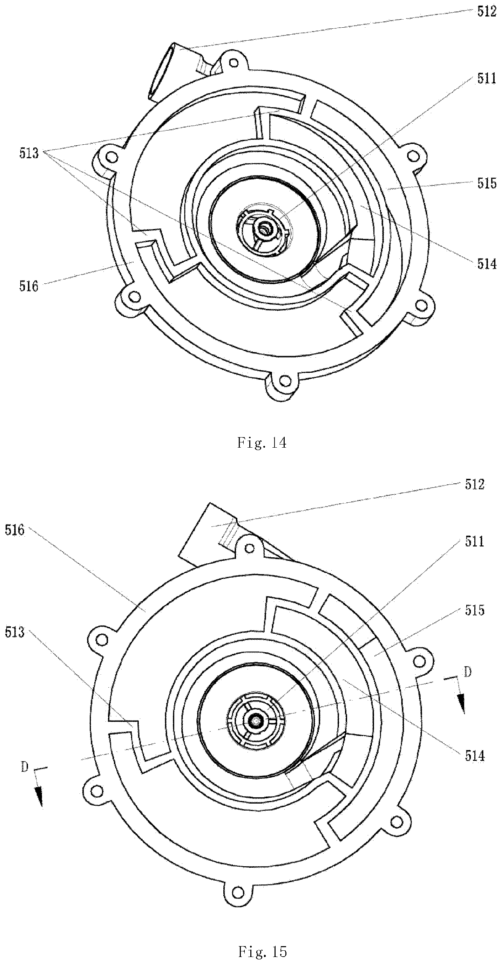

As shown in Figs. 14, 15, 8, 9, 22 and 49, in the first implementation of the present invention, the communicating device or the connecting device includes: a first reversing-communicating component disposed in the pump cover and configured to communicate a first end of a first segment of inner spiral heating flow channel 611 to the suction inlet 511 disposed in the pump cover, communicate a first end of a last segment of outer spiral heating flow channel 633 to the discharge outlet 512 disposed in the pump cover, and connect first ends of other segments of inner spiral heating flow channels 612 and 613 to first ends of other segments of outer spiral heating flow channels 631 and 632 in a staggered way; and a second reversing-communicating component disposed on the lower pump body 530 and configured to connect a second end of each segment of inner spiral heating flow channel 611, 612 and 613 to a second end of each segment of outer spiral heating flow channel 631, 632 and 633.

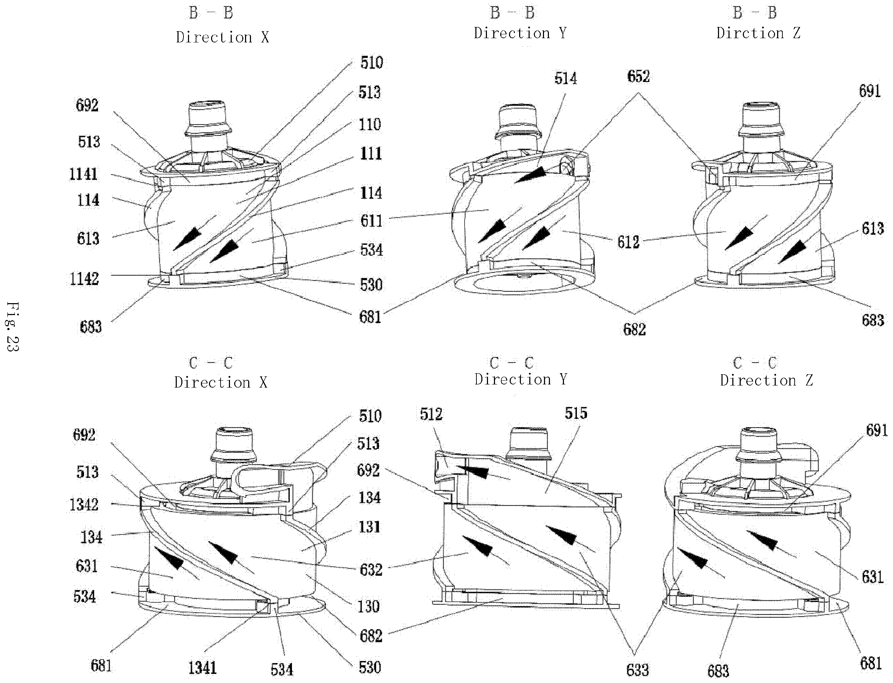

It should be noted that, in the first implementation of the present invention, the first ends of the outer spiral heating flow channels and the first ends of the inner spiral heating flow channels are both located on the pump cover; and the second ends of the outer spiral heating flow channels and the second ends of the inner spiral heating flow channels are both located on the lower pump body. Figs. 23, 14, 15, 22 and 49 show a condition that the number of the inner heating flow channels and the outer heating flow channels in the first implementation of the present invention is 3. Under this condition, the plurality of segments of inner spiral heating flow channels include the first segment of inner spiral heating flow channel 611, a second segment of inner spiral heating flow channel 612 and a third segment of inner spiral heating flow channel 613; the plurality of segments of outer spiral heating flow channels include a first segment of outer spiral heating flow channel 631, a second segment of outer spiral heating flow channel 632 and a third segment of outer spiral heating flow channel 633; the first reversing-communicating component is disposed on an inner wall of the pump cover 510 of the pump body and includes: a heating flow channel inlet groove 514 configured to communicate the first end of the first segment of inner spiral heating flow channel 611 to the suction inlet 511 of the pump; a first reversing groove 691 configured to connect a first end of the second segment of inner spiral heating flow channel 612 to a first end of the first segment of outer spiral heating flow channel 631; a second reversing groove 692 configured to connect a first end of the third segment of inner spiral heating flow channel 613 to a first end of the second segment of outer spiral heating flow channel 632; and a heating flow channel outlet groove 515 configured to communicate a first end of the third segment of outer spiral heating flow channel 633 to the discharge outlet 512 of the pump.

As shown in Figs. 14, 15, 22 and 49, in the first implementation of the present invention, the heating flow channel inlet groove 514 and the heating flow channel outlet groove 515 are located in the same annular area. The heating flow channel inlet groove 514 is located on an inner side of the annular area, and the heating flow channel outlet groove 515 is located on an outer side of the annular area; or the heating flow channel inlet groove 514 is located on the outer side of the annular area, and the heating flow channel outlet groove 515 is located on the inner side of the annular area.

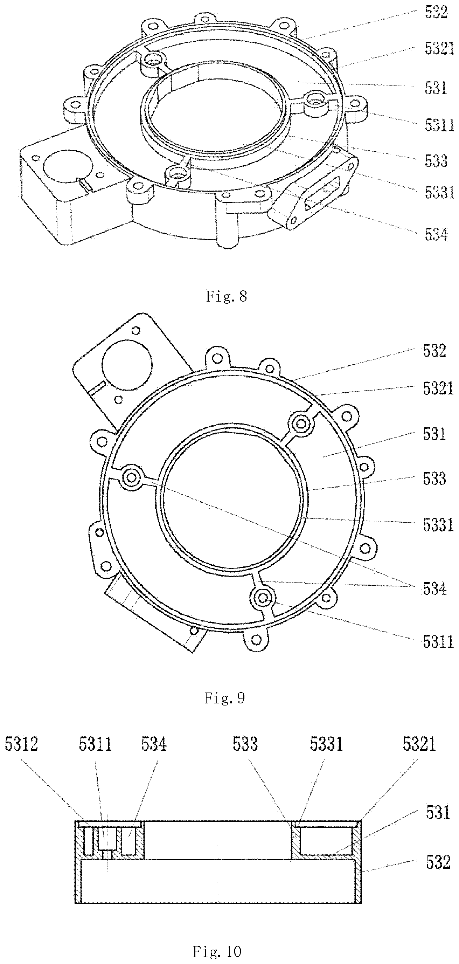

As shown in Figs. 8, 9, 22 and 49, in the first implementation of the present invention, the second reversing-communicating component is disposed on an end of the lower pump body 530 of the pump body and includes: a third reversing groove 681 configured to communicate a second end of the first segment of inner spiral heating flow channel 611 to a second end of the first segment of outer spiral heating flow channel 631; a fourth reversing groove 682 configured to communicate a second end of the second segment of inner spiral heating flow channel 612 to a second end of the second segment of outer spiral heating flow channel 632; and a fifth reversing groove 683 configured to communicate a second end of the third segment of inner spiral heating flow channel 613 to a second end of the third segment of outer spiral heating flow channel 632.

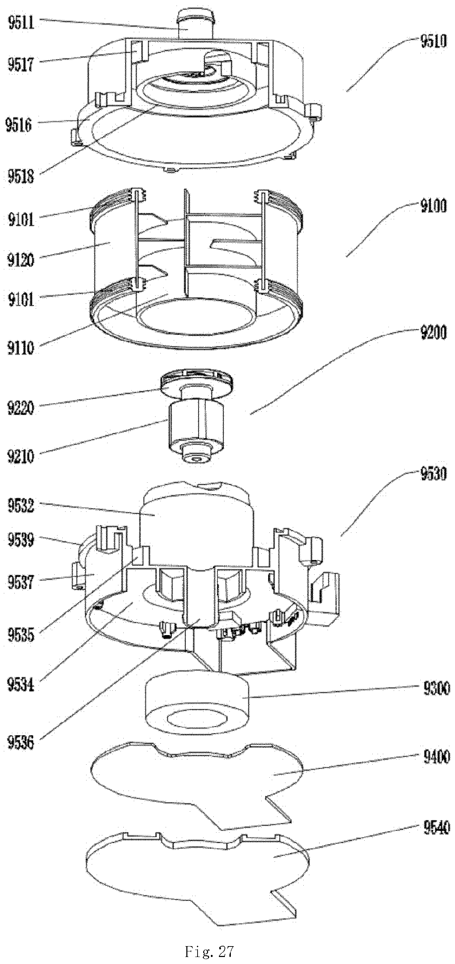

As shown in Figs. 26 and 27, in the first implementation of the present invention, the motor heating component is a tubular stator assembly of the motor; and the heating assembly includes: a heating flow channel ring 9110 mounted on an outer side of a tubular stator; and a tubular heating element 9120 mounted on an outer side of the heating flow channel ring 9110, a heating flow channel space being formed between the heating flow channel ring 9110 and the tubular heating element 9120; wherein the tubular heating element 9120 is located in the outer pump mantle and the lower pump body.

As shown in Figs. 26, 27 and 31, in the first implementation of the present invention, the heating flow channel ring 9110 includes: a tubular matrix; a plurality of annular partition plates 9112 with a gap fixedly disposed on an outer wall of the tubular matrix and configured to partition the heating flow channel space into a plurality of layers of annular heating flow channels 9610 with gaps; and a longitudinal partition plate 9113 respectively connected to one end of each of the annular partition plates 9112 and configured to enable the gap of each of the annular partition plates 9112 to become a liquid outlet and connect the plurality of layers of annular heating flow channels 9610 end to end.

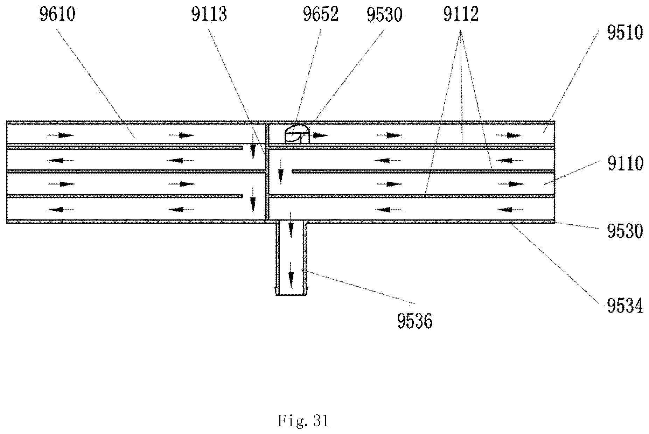

As shown in Fig. 31, in the first implementation of the present invention, a first layer of annular heating flow channel communicates with a suction inlet 9511 disposed in the pump cover; and a last layer of annular heating flow channel communicate with a discharge outlet 9536 disposed in the lower pump body.

In a second implementation of the present invention, the electric pump for the power battery thermal management system comprises a pump body, including a pump cover 510, a lower pump body 530, an outer wall of an outer heating flow channel sleeve 130 located between the pump cover 510 and the lower pump body 530, and a rear cover 540 located on a bottom end of the lower pump body 530 as shown in Fig. 1; or including an outer pump mantle (i.e. a mantle-shaped object) with a pump cover 9510, a lower pump body 9530 located on a bottom end of the outer pump mantle, and a rear cover 9540 located on a bottom end of the lower pump body 9530 as shown in Figs. 24 and 25; or including an outer pump mantle (i.e. a mantle-shaped object) with a pump cover 9510, a lower pump body 9530 located on a bottom end of the outer pump mantle, and a rear cover 8540 located on a bottom end of the lower pump body 9530 as shown in Fig. 32; a motor 2030 mounted in the pump body and including a rotor 210 and a cylindrical stator 300 as shown in Fig. 2 and Fig. 33 or including a rotor 9210 and a cylindrical stator 9300 as shown in Fig. 26;
an impeller 220 or 9220 mounted in the pump body and driven by the motor; and a liquid heating device mounted in the pump body and configured to heat a liquid sucked from a suction inlet 511 and discharged from a discharge outlet 512 by the impeller 220 or 9220, wherein the liquid heating device includes:
an inner heating flow channel sleeve 110 or 8110 sleeved an outer side of the cylindrical stator; and
a tubular heating element 120 or 8120 mounted on an outer side of the inner heating flow channel sleeve 110 or 8110.

As shown in Figs. 3, 26 and 34, in the second implementation of the present invention, the heating assembly includes: the inner heating flow channel sleeve 110 or 8110 sleeved the outer side of the cylindrical stator; and the tubular heating element 120 or 8120 mounted on the outer side of the inner heating flow channel sleeve 110 or 8110.

As shown in Figs. 4, 5 and 23, in the second implementation of the present invention, the inner heating flow channel sleeve 110 or 8110 or 9110 is provided with an inner heating flow channel space 610 allowing a liquid to flow through; and the inner heating flow channel space 610 is provided with a plurality of spirally-disposed partition plates 114 spaced between an inner wall 111 and an outer wall 112 of the inner heating flow channel sleeve and configured to partition the inner heating flow channel space 610 into a plurality of segments of inner spiral heating flow channels 611, 612 and 613.

As shown in Figs. 3 and 16, in the second implementation of the present invention, the heating assembly further includes an outer heating flow channel sleeve 130 mounted on an outer side of the tubular heating element 120 and provided with an outer heating flow channel space 630, and the outer heating flow channel space 630 is configured to allow a liquid to pass through.

As shown in Figs. 4, 5 and 23, in the second implementation of the present invention, the outer heating flow channel space 630 is provided with a plurality of spirally-disposed partition plates 134 spaced between an inner wall 131 and an outer wall 132 of the outer heating flow channel sleeve 130 and configured to partition the outer heating flow channel space 630 into a plurality of segments of outer spiral heating flow channels 631, 632 or 633, wherein spiral directions of the outer spiral heating flow channels 631, 632 or 633 are opposite to spiral directions of the inner spiral heating flow channels 611, 612 and 613.

As shown in Figs. 3 and 7, in the second implementation of the present invention, the tubular heating element 120 includes: a tubular matrix; an electric heating film 121 attached to an outer surface 1201 of the tubular matrix; and thermal conductive insulating glue 1204 covering the electric heating film 121, wherein an outer side of the thermal conductive insulating glue 1204 serve as the outer side of the tubular heating element.

As shown in Figs. 34, 47 and 23, in the second implementation of the present invention, the inner heating flow channel sleeve 8110 includes: a tubular matrix; and a plurality of spiral partition plates 8114 disposed on an inner wall 8111 of the tubular matrix; wherein outer ends of the plurality of spiral partition plates 8114 serve as the outer side of the inner heating flow channel sleeve 8110 to be in contact with an inner wall 1202 of the tubular heating element 8120 so that an inner heating flow channel space 610 allowing a liquid to flow through is formed between the outer wall 8111 of the tubular matrix and the inner wall 1202 of the tubular heating element 8120, and the inner heating flow channel space 610 is provided with a plurality of segments of inner spiral heating flow channels 611, 612 and 613 partitioned by the plurality of segments of spiral partition plates 8114.

As shown in Figs. 34, 47 and 23, in the second implementation of the present invention, the heating assembly further includes an outer heating flow channel sleeve 8130 mounted on an outer side of the tubular heating element 8120. The outer heating flow channel sleeve 8130 includes a tubular matrix; and a plurality of spiral partition plates 8134 disposed on an outer wall 8131 of the tubular matrix, wherein outer ends of the plurality of outer spiral partition plates 8134 serve as an outer side of the outer heating flow channel sleeve 8130; wherein an outer heating flow channel space 630 allowing a liquid to flow through is formed between the outer wall 8131 of the tubular matrix and an inner surface of the outer pump mantle, and the outer heating flow channel space 630 is provided with a plurality of segments of outer spiral heating flow channels 631, 632 and 633 partitioned by the plurality of segments of spiral partition plates 8134; and spiral directions of the outer spiral heating flow channels 631, 632 and 633 are opposite to spiral directions of the inner spiral heating flow channels 611, 612 and 613.

As shown in Figs. 34 and 47, in the second implementation of the present invention, the tubular heating element 8120 includes: a tubular matrix, an inner wall 1202 thereof serving as an inner side of the tubular heating element 8120 to be in contact with the outer side of the inner heating flow channel sleeve 8110; and an electric heating film 121 attached to an outer surface 1201 of the tubular matrix, the electric heating film 121 being surrounded by the outer heating flow channel sleeve 8130.

As shown in Figs. 22 and 49, in the second implementation of the present invention, the plurality of segments of inner spiral heating flow channels 611, 612 and 613 and the plurality of segments of outer spiral heating flow channels 631, 632 and 633 intercommunicate by a communicating device or a connecting device so that each segment of inner spiral heating flow channel 611, 612 and 613 is sequentially connected in series with each segment of outer spiral heating flow channel 631, 632 and 633 in a staggered way to prolong a heating duration of the liquid flowing through the flow channel, so that the liquid heating time is prolonged by about 2N times under the condition that the volume of the tubular heating element is unchanged.

As shown in Figs. 14, 15, 8, 9, 22 and 49, in the second implementation of the present invention, the communicating device or the connecting device includes: a first reversing-communicating component disposed in the pump cover and configured to communicate a first end of a first segment of inner spiral heating flow channel 611 to the suction inlet 511disposed in the pump cover, communicate a first end of a last segment of outer spiral heating flow channel 633 to the discharge outlet 512disposed in the pump cover, and connect first ends of other segments of inner spiral heating flow channels 612 and 613 to first ends of other segments of outer spiral heating flow channels 631 and 632 in a staggered way; and a second reversing-communicating component disposed on the lower pump body 530 and configured to connect a second end of each segment of inner spiral heating flow channel 611, 612 and 613 to a second end of each segment of outer spiral heating flow channel 631, 632 and 633.

It should be noted that, in the second implementation of the present invention, the first ends of the outer spiral heating flow channels and the first ends of the inner spiral heating flow channels are both located on the pump cover; and the second ends of the outer spiral heating flow channels and the second ends of the inner spiral heating flow channels are both located on the lower pump body. Figs. 23, 14, 15, 22 and 49 show a condition that the number of the inner heating flow channels and the outer heating flow channels in the second implementation of the present invention is 3. Under this condition, the plurality of segments of inner spiral heating flow channels include the first segment of inner spiral heating flow channel 611, a second segment of inner spiral heating flow channel 612 and a third segment of inner spiral heating flow channel 613. The plurality of segments of outer spiral heating flow channels include a first segment of outer spiral heating flow channel 631, a second segment of outer spiral heating flow channel 632 and a third segment of outer spiral heating flow channel 633. The first reversing-communicating component is disposed on an inner wall of the pump cover 510 of the pump body and includes: a heating flow channel inlet groove 514 configured to communicate the first end of the first segment of inner spiral heating flow channel 611 to the suction inlet 511 of the pump; a first reversing groove 691 configured to connect a first end of the second segment of inner spiral heating flow channel 612 to a first end of the first segment of outer spiral heating flow channel 631; a second reversing groove 692 configured to connect a first end of the third segment of inner spiral heating flow channel 613 to a first end of the second segment of outer spiral heating flow channel 632; and a heating flow channel outlet groove 515 configured to communicate a first end of the third segment of outer spiral heating flow channel 633 to the discharge outlet 512 of the pump.

As shown in Figs. 14, 15, 22 and 49, in the second implementation of the present invention, the heating flow channel inlet groove 514 and the heating flow channel outlet groove 515 are located in the same annular area. The heating flow channel inlet groove 514 is located on an inner side of the annular area, and the heating flow channel outlet groove 515 is located on an outer side of the annular area; or the heating flow channel inlet groove 514 is located on the outer side of the annular area, and the heating flow channel outlet groove 515 is located on the inner side of the annular area.

As shown in Figs. 8, 9, 22 and 49, in the second implementation of the present invention, the second reversing-communicating component is disposed on an end of the lower pump body 530 of the pump body and includes: a third reversing groove 681 configured to communicate a second end of the first segment of inner spiral heating flow channel 611 to a second end of the first segment of outer spiral heating flow channel 631; a fourth reversing groove 682 configured to communicate a second end of the second segment of inner spiral heating flow channel 612 to a second end of the second segment of outer spiral heating flow channel 632; and a fifth reversing groove 683 configured to communicate a second end of the third segment of inner spiral heating flow channel 613 to a second end of the third segment of outer spiral heating flow channel 632. As shown in Figs. 26 and 27, in the second implementation of the present invention, the heating assembly includes: a heating flow channel ring 9110 mounted on an outer side of a tubular stator; and a tubular heating element 9120 mounted on an outer side of the heating flow channel ring 9110, so that a heating flow channel space is formed between the heating flow channel ring 9110 and the tubular heating element 9120; wherein the tubular heating element 9120 is located in the outer pump mantle and the lower pump body.

As shown in Figs. 26, 27 and 31, in the second implementation of the present invention, the heating flow channel ring 9110 includes: a tubular matrix; a plurality of annular partition plates 9112 fixedly disposed on an outer wall of the tubular matrix with a gap and configured to partition the heating flow channel space into a plurality of layers of annular heating flow channels 9610 with gaps; and a longitudinal partition plate 9113 respectively connected to one end of each of the annular partition plates 9112 and configured to enable the gap of each of the annular partition plates 9112 to become a liquid outlet and connect the plurality of layers of annular heating flow channels 9610 end to end.

As shown in Fig. 31, in the second implementation of the present invention, a first layer of annular heating flow channel communicates with a suction inlet 9511 disposed in the pump cover; and a last layer of annular heating flow channel communicate with a discharge outlet 9536 disposed in the lower pump body.

The present invention will be described in detail below with three specific embodiments. It should be noted that the specific embodiments described with reference to the accompanying drawings are exemplary and are intended to explain the present invention, rather than to be understood as limitations on the present invention.

### First embodiment

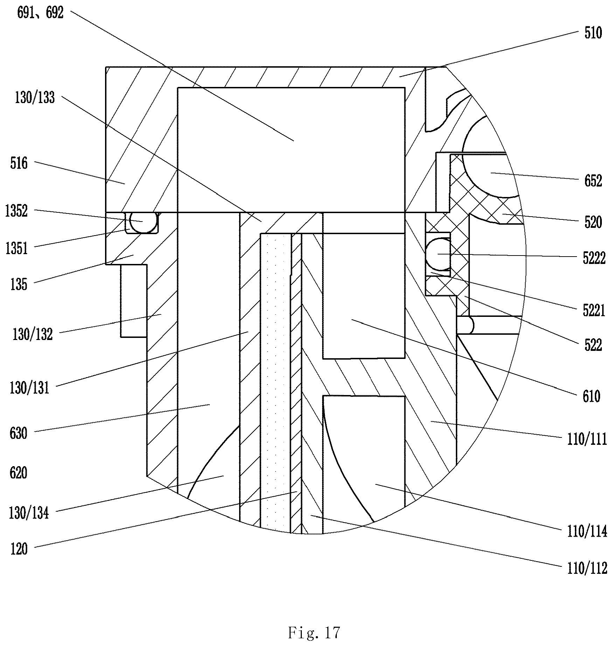

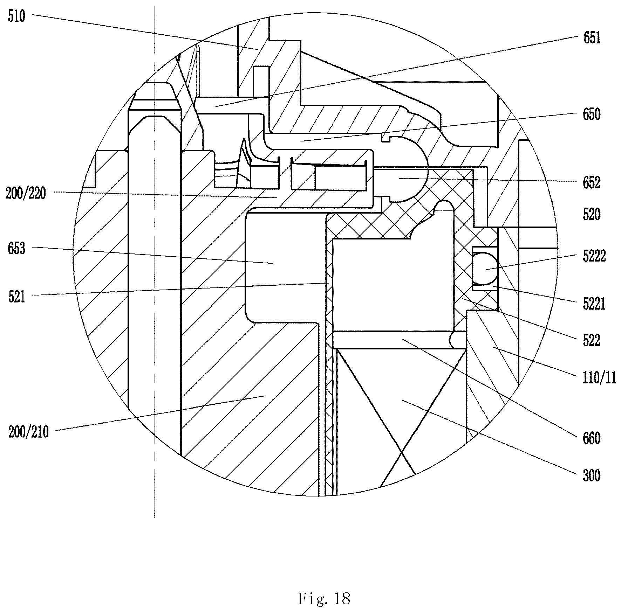

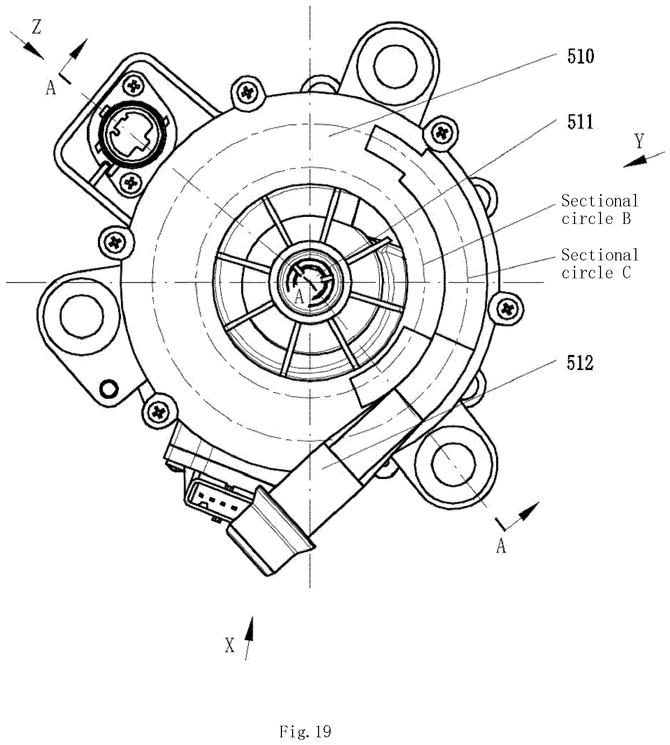

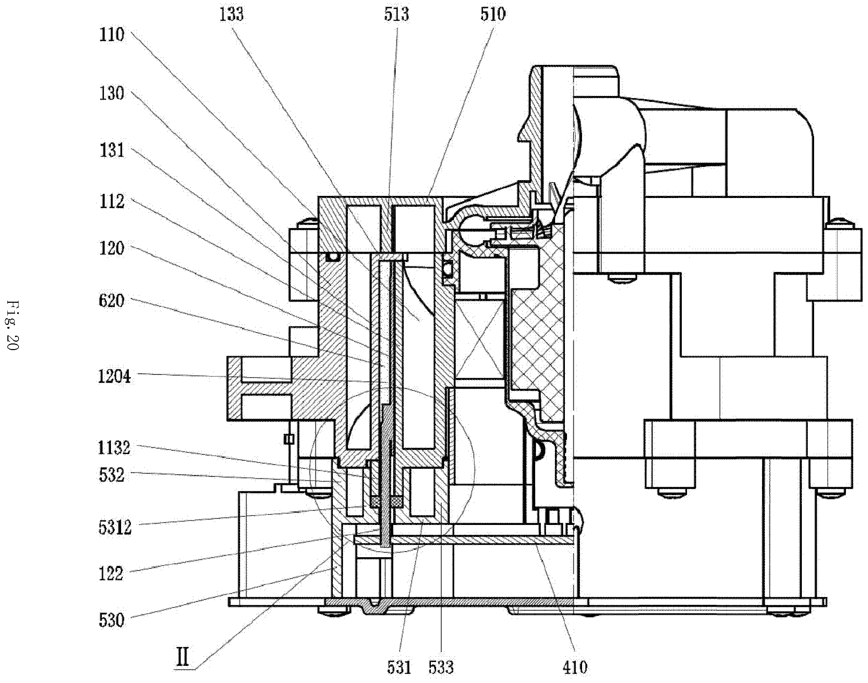

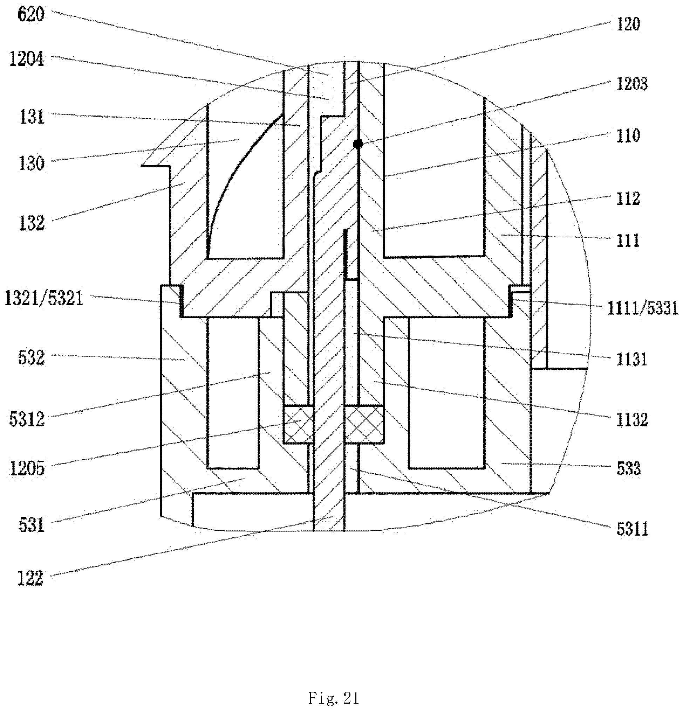

Figs. 1 to 23 show an electric pump in a first embodiment of the present invention. As shown in Figs. 1, 2 and 16, the electric pump in the first embodiment includes a heating assembly 100, an impeller rotor assembly 200, a stator assembly 300, a control assembly 400, a pump cover 510, an inner water-isolating sleeve 520, a lower pump body 530, and a rear cover 540. As shown in Fig. 4, the pump cover 510, the heating assembly 100 and the lower pump body 530 are enclosed and sealed to form an inner heating flow channel space 610 and an outer heating flow channel space 630 on liquid heat exchange parts; the pump cover 510 covers the inner water-isolating sleeve 520 to form an impeller chamber 650 including a suction chamber 651, a volute chamber 652, and a sunken rotor chamber 653; and wherein the heating assembly 100 and the inner water-isolating sleeve 520 are enclosed to form a stator chamber 660. The impeller rotor assembly 200 includes an impeller 210 and a rotor 220, and the stator assembly 300 magnetically drives the rotor 220 to rotate, to form a motor 2030 which drives the impeller to rotate to deliver a liquid.

As shown in Figs. 3 to 7, the heating assembly 100 includes an annular inner heating flow channel sleeve 110, an annular outer heating flow channel sleeve 130, and a tubular heating element 120.

The annular inner heating flow channel sleeve 110 is formed with an inner wall 111 and an outer wall 112, a lower end of the inner wall 111 is provided with a outer seam allowance 1111, a lower end of the outer wall 112 horizontally and outwards extends as an end surface 113, and the circumference of the end surface 113 uniformly and downwards protrudes to form three circular truncated cones 1132 provided with through holes 1131.

The annular outer heating flow channel sleeve 130 is formed with an inner wall 131 and an outer wall 132, an upper end of the inner wall 131 horizontally and inwards extends as an end surface 133, an upper end of the outer wall 132 outwards extends as a flange 135 provided with an annular sealing groove 1351, and a lower end of the outer wall 132 is provided with a outer seam allowance 1321.

Alternatively, the base material of tubular heating element 120 is a thin metal tube made of stainless steel, aluminum or copper, the outer surface 1201 thereof is covered with an insulated thin-layer electric heating film 121 to lead out a conducting wire 122, and preferably, an inner hole surface 1202 is coated with a thermal conductive silicone grease 1203.

With the inner hole surface 1202 clings to the outer wall 112, tubular heating element 120 is sleeved on the inner heating flow channel sleeve 110.The conducting wire 122 downwards passes through the through holes 1131.Then, the outer heating flow channel sleeve 130 coaxially sleeves an outer side of the inner heating flow channel sleeve 110, at the moment, a lower end of the inner wall 131 of the outer heating flow channel sleeve is attached to the end surface 113 of the inner heating flow channel sleeve, the end surface 133 of the outer heating flow channel sleeve is attached to an upper end of the outer wall 112 of the inner heating flow channel sleeve, its attached surfaces are coated with a plane sealant (unshown in the figure), the inner wall 131 is provided with a gap surrounding the tubular heating element 120, thereby forming the heating assembly 100 . The outer wall 112, the end surface 113, the inner wall 131, and the end surface 133 are enclosed to form an annular heating chamber 620 for sealing and accommodating the tubular heating element 120.

As shown in Figs. 8 to 10, the lower pump body 530 is formed with an approximately annular end surface 530, an outer wall 532, an inner wall 533, and partition plates 534, the circumference of the end surface 531 uniformly and upwards protrudes to form three circular truncated cones 5312 provided with countersunk through holes 5311 and matched with the three circular truncated cones 1132 on the lower end surface 113 of the inner heating flow channel sleeve 110. Preferably, as shown in Fig. 6, an upper end of the outer wall 532 is provided with a inner seam allowance 5321 matched with the outer seam allowance 1321 of the outer heating flow channel sleeve, and an upper end of the inner wall of 533 is provided with a inner seam allowance 5331 matched with the outer seam allowance 1111 of the inner heating flow channel sleeve. After being coated with the plane sealant, the outer seam allowance 1111 on the inner wall of the inner heating flow channel sleeve 110 and the outer seam allowance 1321 on the outer wall of the outer heating flow channel sleeve 130 are respectively nested with the inner seam allowance 5331 and the inner seam allowance 5321 respectively located on the inner wall and the outer wall of the lower pump body 530 and are fastened by using peripheral bolts. At the same time, as shown in Figs. 7, 10, 20 and 21, after being coated with the plane sealant, end surfaces of the circular truncated cones 1132 on the end surface 113 of the inner heating flow channel sleeve 110 are inserted into the countersunk through holes 5311 of the lower pump body 530, a conducting wire 122 downwards passes through the holes 5311, and thermal conductive insulating glue 1204 is filled for sealing and insulating. Preferably, at least one pair of through holes 5311 and 1131 through which the conducting wire does not pass is retained as glue filling holes in which the thermal conductive insulating glue is injected to fill all gaps of the annular heating chamber 620 in order to achieve thermal conduction.

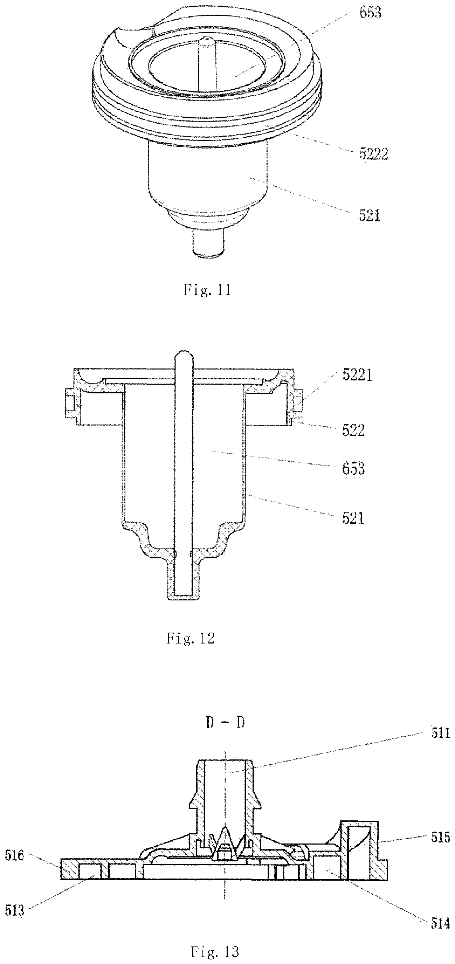

Referring to Figs. 11 and 12, the inner water-isolating sleeve 520 is formed with a cylindrical rotor chamber 521 which is closed in the lower end and opened in the upper end and is used for accommodating a rotor 210, the opening in the upper end outwards expands and extends as an approximately circular step surface, and the periphery of the step surface downwards turns back and extends as an outer drum 522 formed with an annular sealing groove 5221. Referring to Figs. 16 to 18, the inner water-isolating sleeve 520 is coaxially sleeved in the inner heating flow channel sleeve 110, the outer drum 522 is attached to the inner wall 111 of the inner heating flow channel sleeve 110 and is sealed by an O-shaped ring 5222 in the annular sealing groove 5221 to define the stator chamber 660 for accommodating the stator assembly 300 and parts of components of the control assembly 400. The peripheral surface of the stator assembly 300 sleeved into the stator chamber 660 clings to the inner wall 110 of the inner heating flow channel sleeve, and a gap therebetween is filled with epoxy resin for fixation.

Referring to Figs. 13 to 15, the pump cover 510 is formed with a suction inlet 511 and a discharge outlet 512 of the pump, partition plates 513, an inlet 514 and an outlet 515 of a heating flow channel, and a flange 516 on a peripheral wall, wherein the partition plates 513 are special-shaped partition plates and are attached to partition plates 114 and 134 and the end surface 133 of the heating assembly 100, and the flange 516 covers the outer heating flow channel sleeve 135 and is fastened by using peripheral bolts.

Referring to Figs. 22 and 23, the inlet 514 of the heating flow channel located on the pump cover 510 communicates with the volute chamber 652, and the outlet 515 communicates with the discharge outlet 512 of the pump.

Three right spiral partition plates 114 spaced for about 120 DEG are uniformly formed along a circumference between the inner wall 111 and the outer wall 112 of the annular inner heating flow channel sleeve 110, a head end 1141 of each partition plate 114 starts from upper ends of the inner wall 111 and the outer wall 112 and is attached to the partition plates 513 of the pump cover 510, a tail end 1142 ends at lower ends of the inner wall 111 and the outer wall 112 and is attached to the partition plates 534 of the lower pump body 530, the head end 1141 and the tail end 1142 of each partition plate 114 are spaced for about 120 DEG along the circumference, and the annular inner heating flow channel space 610 is partitioned into three segments of right inner spiral heating flow channels 611, 612 and 613 by the three partition plates 114.

Three left spiral partition plates 134 spaced for about 120 DEG are uniformly formed along a circumference between the inner wall 131 and the outer wall 132 of the annular outer heating flow channel sleeve 130, rotation directions thereof are opposite to those of the partition plates 114, a head end 1341 of each partition plate 134 starts from lower ends of the inner wall 131 and the outer wall 132 and is attached to the partition plates 534 of the lower pump body 530, a tail end 1342 ends at upper ends of the inner wall 131 and the outer wall 132 and is attached to the partition plates 513 of the pump cover 510, the head end 1341 and the tail end 1342 of each partition plate 134 are spaced for about 120 DEG along the circumference, and the annular outer heating flow channel space 630 is partitioned into three segments of left outer spiral heating flow channels 631, 632 and 633 by the three partition plates 134.

As shown in Fig. 22 and Fig. 23, a first end (or an inlet) of the inner heating flow channel 611 communicates with the volute chamber 652 after being connected to a heating flow channel inlet 514 disposed in the pump cover 510; and an outlet of the inner heating flow channel 611 is connected to a reversing groove 681 disposed in the lower pump body 530, an inlet of the outer heating flow channel 631 is connected to the reversing groove 681 disposed in the lower pump body 530, and an outlet thereof is connected to a reversing groove 691 disposed in the pump cover 510, so that the outlet of the inner heating flow channel 611 is connected to the inlet of the outer heating flow channel 631 through the reversing groove 681.

An inlet of the inner heating flow channel 612 is connected to the reversing groove 691 disposed in the pump cover 510; an inlet of outer heating flow channel 632 is connected to a reversing groove 682 disposed in the lower pump body 530, and an outlet thereof is connected to a reversing groove 692 disposed in the pump cover, so that an outlet of the outer heating flow channel 631 is connected to the inlet of the inner heating flow channel 612 through the reversing groove 691 disposed in the pump cover, and the outlet of the inner heating flow channel 612 is connected to an inlet of the outer heating flow channel 632 through the reversing groove 682 disposed in the lower pump body 530.

An inlet of the inner heating flow channel 613 is connected to the reversing groove 692 disposed in the pump cover 510, and an outlet thereof is connected to a reversing groove 683 disposed in the lower pump body; and an inlet of the outer heating flow channel 633 is connected to the reversing groove 683 disposed in the lower pump body 530, and an outlet thereof communicates with the discharge outlet 512 of the pump after being connected to a heating flow channel outlet 515 disposed in the pump cover, so that an outlet of the outer heating flow channel 632 is connected to the inlet of the inner heating flow channel 613 through the reversing groove 692 disposed in the pump cover, the outlet of the inner heating flow channel 613 is connected to an inlet of the outer heating flow channel 633 through the reversing groove 683 disposed in the lower pump body 530, and an outlet of the outer heating flow channel 633 is connected with the heating flow channel outlet 515.

According to the present invention, the inlets of the inner heating flow channels 611, 612 and 613 are referred to as first ends of the inner heating flow channels 611, 612 and 613; and the outlets of the inner heating flow channels 611, 612 and 613 are referred to as second ends of the inner heating flow channels 611, 612 and 613.

According to the present invention, the outlets of the outer heating flow channels 631, 632 and 633 are referred to as first ends of the outer heating flow channels 631, 632 and 633; and the inlets of the outer heating flow channels 631, 632 and 633 are referred to as second ends of the outer heating flow channels 631, 632 and 633.

A flow path of a liquid is that: the liquid is guided into the volute chamber 652 via the suction inlet 511 in the pump cover by a rotating impeller to boost, enters the inner heating flow channel 611 via the inlet 514 of the flow channel in the pump cover, enters the outer heating flow channel 631 via the reversing groove 681, enters the inner heating flow channel 612 via the reversing groove 691, enters the outer heating flow channel 632 via the reversing groove 682, enters the inner heating flow channel 613 via the reversing groove 692, enters the outer heating flow channel 633 via the reversing groove 683, and finally flows into the flow channel outlet 515 in the pump cover and is discharged via the discharge outlet 512 of the pump.

The liquid flows through the inner heating flow channel space 610 and the outer heating flow channel space 630 disposed around the annular heating chamber 620 and the tubular heating element 120 to achieve heat exchange, so that the liquid is heated as required. Moreover, the inner heating flow channel space 610 is partitioned into three inner spiral flow channels 611, 612 and 613 uniformly distributed along the circumference, the outer heating flow channel space 630 is partitioned into three outer heating flow channels 631, 632 and 633 uniformly distributed along the circumference, they sequentially communicate through the reversing grooves 681, 691, 682, 692 and 683 on upper and lower ends, and an about 6-time heating pipeline is increased. Furthermore, the length of each spiral flow channel is increased by 1.3 to 1.5 times as comparison with the length of an axial straight flow path pipeline, and the time for heat exchange between the liquid and the tubular heating element 120 is prolonged by 7 to 9 times under the condition that a flow rate is basically unchanged, so that the heat exchange efficiency is greatly increased.

In the design in the above-mentioned embodiment, the partition plates 114 and 134 may be uniformly or non-uniformly distributed along the circumference; the right spiral partition plates 114 may also be left spiral partition plates, the left spiral partition plates 134 may also be right spiral partition plates, and the end-to-end communication of the flow channels 611, 631, 612, 632, 613 and 633 may be achieved as long as rotation directions of the partition plates 114 are opposite to rotation directions of the partition plates 134. Spacing angles of the head and tail ends 1141 and 1142 as well as 1341 and 1342 of the spiral partition plates along the circumference may be 120 DEG or other angles, and the head and tail ends may be spiral ends or starting and ending ends where the partition plates are transitioned from the spiral ends to linear or arc ends.

In other variant designs, the inner heating flow channel space and the outer heating flow channel space may also be partitioned into other number of spiral flow channels, for example, they are partitioned into two inner spiral flow channels and two outer spiral flow channels uniformly distributed along the circumference, they sequentially communicate through the reversing grooves in the upper and lower ends, the increased heating pipelines are reduced, an about 4-time heating pipeline is only increased, and the flow resistance of a water flow is reduced, which is beneficial to the reduction of the power of the motor; and for another example, the inner heating flow channel space and the outer heating flow channel space may also be partitioned into four inner spiral flow channels and four outer spiral flow channels uniformly distributed along the circumference, they sequentially communicate through the reversing grooves in the upper and lower ends, the heating pipelines are further increased to about 8 times, the time for heat exchange between the liquid and the tubular heating element 120 is further prolonged, the heat exchange efficiency is further increased, however, the flow resistance of a liquid flow is increased, and the power of the motor needs to be increased to a certain extent.

In the present embodiment, by the above-mentioned disposing, a chamber allowing a liquid in the pump to pass through is formed around the peripheral columnar surface of the stator, a tubular electric heating element is disposed in the chamber, the outer heating flow channel space 630, the tubular heating element 120 and the inner heating flow channel space 610 are sequentially surrounded and combined to form the heating assembly 100 by which a stator 300 and an impeller 220 of a motor are surrounded, the rotor 210 is surrounded by the stator 300, the inlet of the inner heating flow channel space 610 communicates with the volute chamber 652 after being connected to the inlet 514, all the assemblies are approximately coaxially disposed from the outside to the inside, an electric heating function of the electric pump in the power battery thermal management system is skillfully used and is only started in a cold environment, and perfect temperature control is provided, so that the convention that the motor should not be close to a heat structure to avoid damage is broken; a columnar surface of the motor is surrounded by the chamber internally provided with the electric heating element and allowing the liquid in the pump to pass through, and "T"-shaped spaces on two sides of the electric pump are utilized, so that use positions are reduced, it is convenient to implement a high-efficiency flow channel design, the temperature rise of the motor can still meet the requirement of a product standard, and particularly, an axial space taken up by a heating element of an existing electric pump is reduced. In addition, an upstream of each heating flow channel communicates with the volute chamber, the liquid flows through the volute chamber to form high-pressure potential energy and then flows into the heating flow channel, and thus, the lift at a rated flow is increased.

The inner circumference and periphery as well as upper and lower ends of the heating chamber are surrounded by the heating flow channels and the reversing grooves thereof, so that the heat exchange efficiency is increased, and part of heat of the tubular heating element is prevented from being radiated to the inside or outside of the pump body, which is beneficial to the saving of energy sources.

Further, the inner water-isolating sleeve 520 and the lower pump body 530 may be formed by integral injection, in this way, the stator chamber is completely isolated from the impeller chamber and the heating flow channels, and it is unnecessary to dispose a sealing structure such as the O-shaped ring 5222 and the seam allowance 1111/5331.

In other embodiments, if an external rotor motor is adopted, the stator chamber enclosed by the inner wall 111 of the inner heating flow channel sleeve correspondingly becomes a rotor for accommodating the motor, and the stator is surrounded by the rotor and is located in the center of the motor.

### Second embodiment

Figs. 24 to 27 show an electric pump in a second embodiment of the present invention. The electric pump includes a heating assembly 9100, an impeller rotor assembly 9200, a stator assembly 9300, a control assembly 9400, a pump cover 9510, a lower pump body 9530, and a rear cover 9540. The impeller rotor assembly 9200 includes an impeller 9220 and a rotor 9210, and the stator assembly 9300 magnetically drives the rotor assembly 9220 to rotate to form a motor 92030. As shown in Figs. 26 to 27, the heating assembly 9100 includes a heating flow channel ring 9110, a tubular heating element 9120, and a rubber sealing ring 9101. The tubular heating element 9120 has a substrate which is a thin metal tube made of stainless steel, aluminum or copper, an outer surface thereof is covered with an insulated thin-layer electric heating film. The heating flow channel ring 9110 is formed with a tubular inner ring 9111 by injection, an outer surface thereof radially extends to form three annular partition plates 9112 with the gaps and one longitudinal partition plate 9113, which are partitioned to form four layers of annular heating flow channels 9610 with reciprocating flow directions. An tubular heating element 9120 is sleeved on the heating flow channel ring 9110, upper and lower ends thereof are embedded with the rubber sealing ring 9101 with an annular groove so as to be combined into the heating assembly 9100. The liquid flow is in direct contact with an inner hole surface of the tubular heating element 9120, and therefore, the heat exchange efficiency is extremely high.

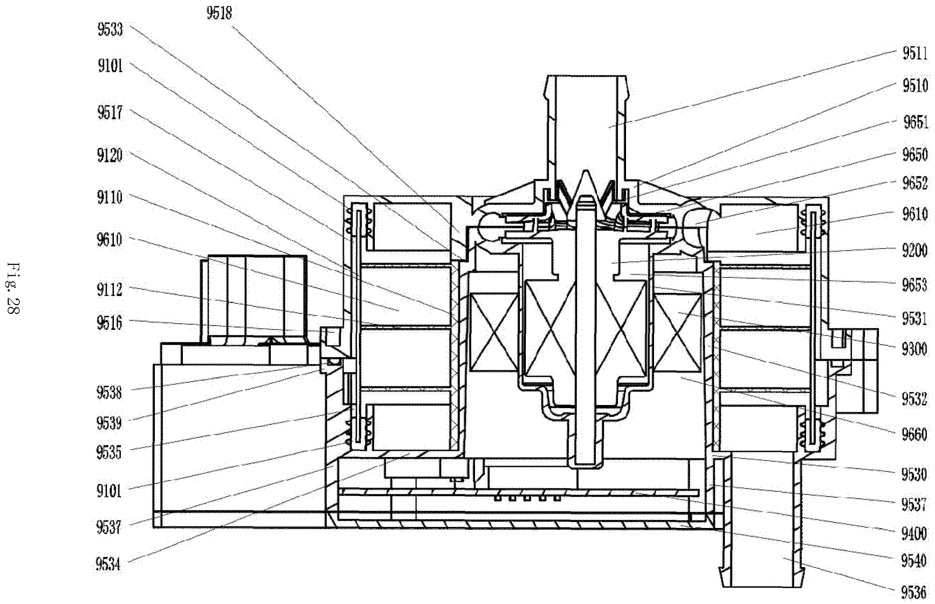

As shown in Figs. 26 to 28, the center of the lower pump body 9530 is formed with a cylindrical rotor chamber wall 9531 which is closed in the lower end and opened in the upper end, the opening in the upper end of the rotor chamber wall 9531 outwards expands and extends to form an approximately circular step surface, and the periphery of the step surface downwards turns back and extends as a downwards-opened stator chamber wall 9532 to form a stator chamber 9660 for accommodating the stator assembly 9300, an upper end of an outer wall of the stator chamber wall 9532 is provided with an annular step 9533, the opening in the lower end thereof outwards extends as an approximately annular end surface 9534, and the periphery of the end surface 9534 is provided with an annular clamping groove 9535 for clamping the tubular heating element 9120, a lower side of the end surface 9534 is formed with a downward discharge port 9536 of the pump, upper and lower sides of the end surface 9534 keep away from the discharge port 9536 of the pump and extend as a housing 9537 of the pump, an upper end of the housing 9537 outwards extends as a flange 9539 provided with an annular sealing groove 9538, and a control chamber 9670 accommodating the control module 9400 is formed in the lower space of the housing 9537. The heating assembly 9100 is sleeved into the lower pump body 9530, an annular heating flow channel 9610 is closed on a lower end, a lower end of the tubular heating element 9120 sleeved with the rubber sealing ring 9101 is clamped into the clamping groove 9535 of the lower pump body 9530 to perform sealing, and an inner hole of the heating flow channel ring 9110 coaxially clings to and is sleeved into the stator chamber wall 9532 of the pump body 9530.

The pump cover 9510 is formed with a suction inlet 9511 of the pump, a flange 9516, an annular clamping groove 9517, and an annular middle wall 9518. The flange 9539 on the lower pump body 9530 is covered by the flange 9516 and is fastened by using peripheral bolts. An O-shaped ring is disposed in the annular sealing groove 9538 to seal the pump body and enclose the heating flow channel 9610. The annular clamping groove 9517 is clamped into an upper end of the tubular heating element 9120 sleeved with the rubber sealing ring 9101 to perform sealing. The tubular heating element 9120 and the heating flow channel 9610 are enclosed together. At the same time, the annular middle wall 9518 of the pump cover 9510 covers the annular step 9533 on the outer wall of the stator chamber of the lower pump body 9530 to form an impeller chamber 9650. The impeller chamber 9650 includes a suction chamber 9651, a volute chamber 9652, and a sunken rotor chamber 9653 for accommodating the impeller rotor assembly 9200 formed by combining the impeller 9220 and the rotor 9210. A liquid flow in the volute chamber 9652 passes through the annular middle wall 9518 and flows into the heating flow channel 9610.

The lower part of the housing 9537 of the lower pump body 9530 encloses the control chamber 9670 for accommodating the control assembly 9400, which is covered and sealed by the rear cover 9540.

The annular partition plates 9112 and the longitudinal partition plate 9113 of the heating flow channel ring 9110 are enclosed together with the end surface 9534 of the lower pump body 9530, the pump cover 9510 and the annular middle wall 9518 thereof as well as the tubular heating element 9120 to form a reciprocating four layers of annular heating flow channels 9610. The liquid flow entering from the suction inlet 9511 at the upper end of the pump is pumped into the annular heating flow channel 9610 by the volute chamber 9652 after being pressurized by the impeller 9220 and is downwards discharged from the discharge outlet 9536 of the pump after being heated by the tubular heating element 9120, and the liquid flow is in direct contact with a tube wall of the tubular heating element 9120, so that the thermal resistance is greatly reduced, and the heat exchange efficiency is high. Moreover, compared with one longitudinal flow channel, the plurality of layers of heating flow channels are increased by several times, so that the thermal conduction efficiency is further increased, however, the flow resistance is increased, and the flow is slightly reduced.

In the present embodiment, by the above-mentioned disposing, a peripheral columnar surface of the stator is enclosed to form a chamber allowing a liquid in the pump to pass through, a tubular electric heating element is disposed in the chamber, the annular heating flow channel 9610 is surrounded by the tubular heating element 9120, the stator 9300 of the motor is surrounded by the annular heating flow channel 9610, the rotor 9210 is surrounded by the stator 9300, all the assemblies are approximately coaxially disposed from the outside to the inside, an electric heating function of the electric pump in the power battery thermal management system is skillfully used which is only started in a cold environment and perfect temperature control is provided, so that the convention that the motor should not be close to a heat structure to avoid damage is broken; a columnar surface of the motor is surrounded by the chamber internally provided with the electric heating element and allowing the liquid in the pump to pass through, and "T"-shaped spaces on two sides of the electric pump are utilized, so that use positions are reduced, it is convenient to implement a high-efficiency flow channel design, the temperature rise of the motor can still meet the requirement of a product standard, and particularly, an axial space taken up by a heating element of an existing electric pump is reduced. In addition, an upstream of each heating flow channel communicates with the volute chamber, the liquid flows through the volute chamber to form high-pressure potential energy and then flows into the heating flow channel, and thus, the lift at a rated flow is increased.

In other variant embodiments, the heating flow channel 9610 is disposed towards an inner side by the heating flow channel ring 9110, then, the tubular heating element 9120 is surrounded, and the stator 9300 of the motor is surrounded by the tubular heating element 9120. By disposing the overall structure in such a way, the driving motor and the impeller of the pump can also be surrounded by the heating flow channel 9610, the axial space is saved, and the beneficial effect of high-efficiency thermal conduction is achieved.

### Third embodiment

An electric pump in a third embodiment is a variant design of the first embodiment, and their main design differences lie in mounting and matching structures of the heating assembly, the pump cover, and the lower pump body, etc. As shown in Figs. 32, 33 and 47, the electric pump also includes a heating assembly 8100, an impeller rotor assembly 200, a stator assembly 300, a control assembly 8400, a pump cover 8510, an inner water-isolating sleeve 8520, a lower pump body 8530, and a rear cover 8540.

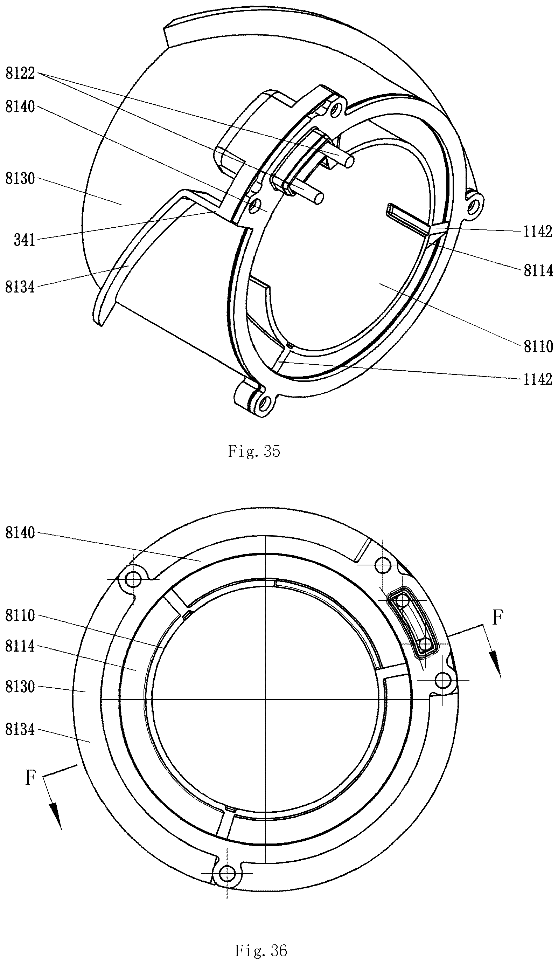

As shown in Figs. 34 to 37, the variant design includes an annular inner heating flow channel sleeve 8110, an annular outer heating flow channel sleeve 8130, a tubular heating element 8120, and a spacing ring 8140 additionally disposed on a lower end of the heating assembly.

The annular inner heating flow channel sleeve 8110 is formed with an inner wall 8111, but is not provided with an outer wall 112 and an end surface 113. A lower end of the inner wall is formed with a gap. A lower end of an inner circumference of the inner wall is formed with three uniformly distributed axial grooves. Three right spiral partition plates 8114 spaced for about 120 DEG are uniformly formed along an outer circumference of the inner wall to play the same isolation and flow guide roles as the right spiral partition plates 114 of the inner heating flow channel sleeve in the first embodiment.

The annular outer heating flow channel sleeve 8130 is formed with an inner wall 8131, but is not provided with an outer wall 132. An upper end of the inner wall 8131 inwards and horizontally extends as an end surface 8133, a lower end thereof is formed with a wire outgoing notch 8136. Three left spiral partition plates 8134 spaced for about 120 DEG are uniformly formed along an outer circumference of the inner wall 8131 to play the same isolation and flow guide roles as the left spiral partition plates 134 of the outer heating flow channel sleeve in the first embodiment. The tubular heating element 8120 also has a substrate which is a thin metal tube made of stainless steel, aluminum or copper, and an outer surface thereof is covered with an insulated thin-layer electric heating film 121 and a conducting wire 8122 is led out from the outer surface thereof. After being coated with a plane sealant, the end surface 8133 of the outer heating flow channel sleeve 8130 is matched with an upper end surface of the sleeved tubular heating element 8120 to form an annular heating chamber 620. The conducting wire 8122 is aligned with the wire outgoing notch 8136 to downwards pass. Thermal conductive insulating glue 1204 is injected to fill the heating chamber 620 to conduct heat and seal the electric heating film 121. Then, the spacing ring 8140 of which the end surface is coated with the plane sealant covers the chamber, and the conducting wire 8122 passes through a wire outgoing hole of the spacing ring 8140. Finally, an inner hole surface of the tubular heating element 8120 is sleeved by the inner heating flow channel sleeve 8110, and thus, the heating assembly 8100 is formed.

The spacing ring 8140 is used for sealing the heating chamber 620, and is made of a metal material. spacing ring 8140 may also be made of a plastic material to reduce the cost. A tube of the tubular heating element may be circular, elliptic or square.

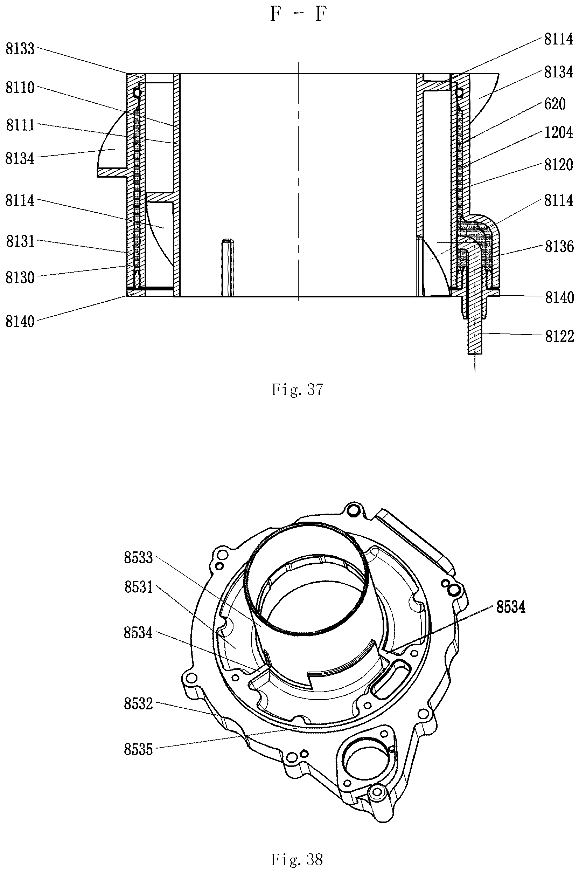

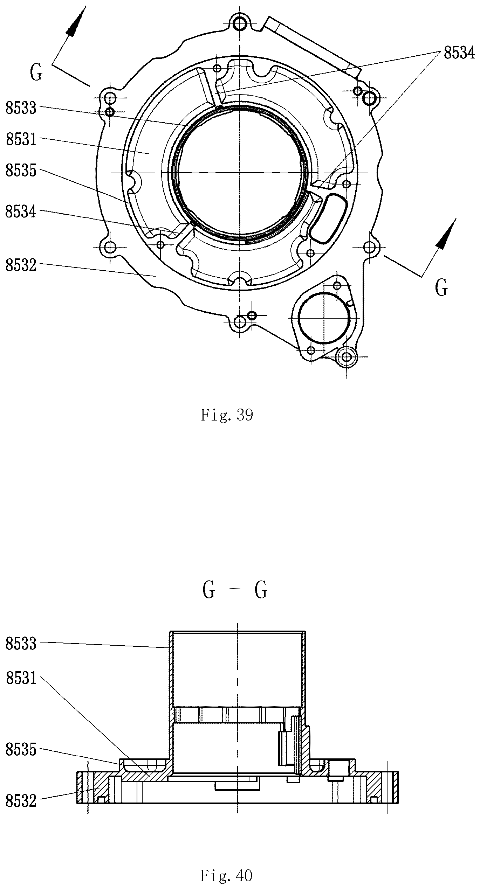

As shown in Figs. 38 to 40, the lower pump body 8530 is formed with an approximately annular end surface 8531, an outer wall 8532 downwards extending and provided with an outer flange, an upwards extending inner ring 8533, and a convex ring 8535 upwards protruded in the middle. The convex ring 8535 is provided with threaded holes used for fastening the heating assembly 8100. An outer surface of the inner ring 8533 is formed with one protrusion and three uniformly-distributed axial convex ribs. a connecting partition plates 8534 are disposed between the inner ring 8533 and the convex ring 8535 to play the same isolation and flow guide roles as the partition plates 534 of the lower pump body in the first embodiment.

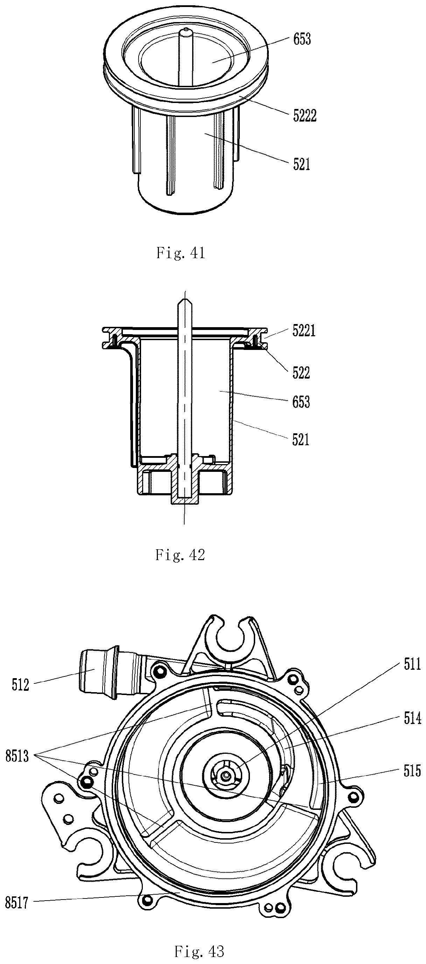

As shown in Figs. 41 and 42, mounting and matching functional structures thereof are approximately the same as those of the inner water-isolating sleeve 520 in the first embodiment.

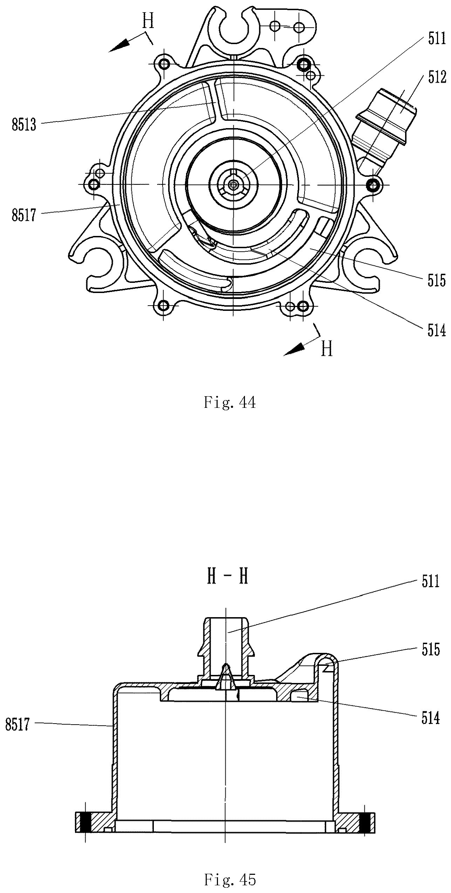

As shown in Figs. 43 to 45, the pump cover 8510 is also formed with a suction inlet 511 and a discharge outlet 512 of the pump, partition plates 8513, an inlet 514 and an outlet 515 of a heating flow channel. The extension of a peripheral wall 8517 replaces a function as a fence of the outer wall 132 of the outer heating flow channel sleeve in the first embodiment. The peripheral wall 8517 is also provided with a flange for covering and fastening the lower pump body 8530, wherein the partition plates 8513 are straight, but are not special-shaped, and play the same isolation and flow guide roles as the partition plates 513 of the pump cover in the first embodiment.

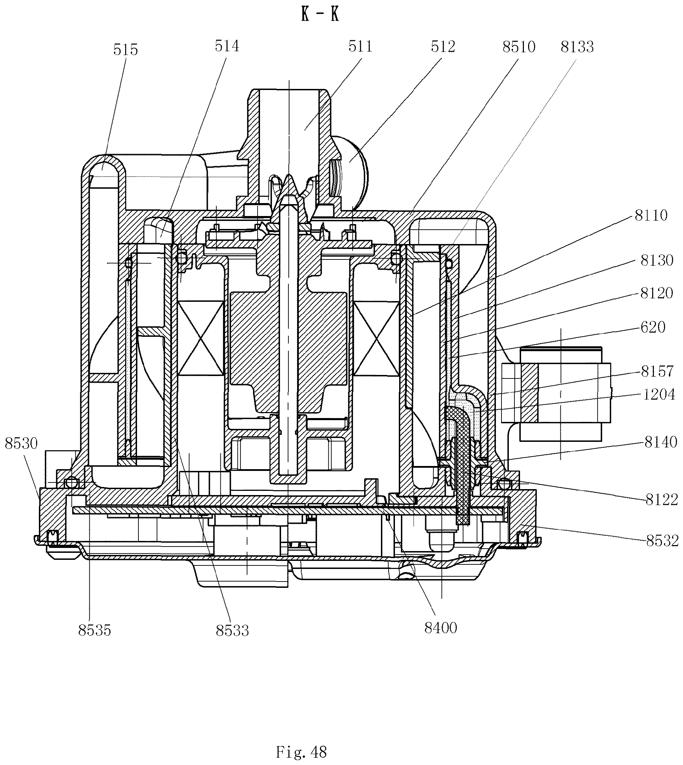

As shown in Figs. 33, 47, 48 and 49, the heating assembly 8100 is sleeved with the lower pump body 8530. The inner wall 8111 of the inner heating flow channel sleeve is nested with the inner ring 8533 of the lower pump body. A gap in a lower end of the inner wall 8111 of the inner heating flow channel sleeve 8110 is clamped with the protrusion on the outer surface of the inner ring 8533 of the lower pump body 8530. Three grooves are clamped with the three convex ribs. Bolt through holes of the outer heating flow channel sleeve 8130 and the spacing ring 8140 are aligned with threaded holes of the lower pump body 8530 and are fastened by using bolts. Then, the stator assembly 300, the inner water-isolating sleeve 8520 and the impeller rotor assembly 200 are sequentially assembled, and then, the pump cover 8510 is sleeved and is fastened in the flange on the outer wall 8532 of the lower pump body by using bolts. In this way, the peripheral wall 8517 and the inner wall 8131 of the outer heating flow channel sleeve are enclosed to form an outer heating flow channel space 630, an inner hole surface 1201 of the tubular heating element 8120 is attached to spiral partition plates 8114 of the inner heating flow channel sleeve and is enclosed with the inner wall 8111 to form an inner heating flow channel space 610.

As shown in Figs. 49 and 23, spatial positions of the heating flow channels and communicating ways of an upstream and a downstream of a flow guide line are the same as those in the first embodiment except that there are differences in parts for fence structures for enclosing the heating flow channels . In the first embodiment, the spiral partition plates 114 and the outer wall 112 for enclosing and forming the inner heating flow channels 611, 612 and 613 are formed on the inner heating flow channel sleeve 110, and the spiral partition plates 134 and the outer wall 132 for enclosing and forming the outer heating flow channels 631, 632 and 633 are formed on the outer heating flow channel sleeve 130. In the present embodiment, the spiral partition plates 8114 for enclosing and forming the inner heating flow channels 611, 612 and 613 are formed on the inner heating flow channel sleeve 8110, and the outer wall 112 is replaced with the tubular heating element 8120, in this way, a gap is allowed to exist between each of the spiral partition plates 8114 and the tubular heating element 8120, which facilitates mounting. Moreover, the tubular heating element 8120 directly conducts heat to the liquid, so that the thermal conduction efficiency is high; and it is unnecessary to indirectly conduct heat by the outer wall 112, and the inner heating flow channel sleeve 8110 may be made of plastics instead of thermal conductive metal, so that the manufacturing cost is reduced. The spiral partition plates 8134 for enclosing and forming the outer heating flow channels 631, 632 and 633 are formed on the outer heating flow channel sleeve 8130, and the outer wall 132 turns to be formed on the pump cover 8510 to become the peripheral wall 8517 of the pump cover 8510, in this way, the manufacturability is good, and a set of flange fastening structure is omitted.

The spiral partition plates 8114 and 8134 may also be changed to be shaped like straight strips as long as they can play the fence and flow guide roles of the heating flow channels 611, 612, 613, 631, 632 and 633 in the first embodiment. The partition plates 8114 and the inner heating flow channel sleeve 8110 may also be separately formed and are then fixedly connected by welding, riveting or clamping. The partition plates 8134 and the outer heating flow channel sleeve 8130 may also be separately formed and are then fixedly connected by welding, riveting or clamping.

In the description of the present application, it should be noted that directional or positional relationships indicated by terms such as "center", "longitudinal, "transverse", "upper", "lower", "front", "rear", "left", "right", "vertical", "horizontal", "top", "bottom", "inner" and "outer" are based on directional or positional relationships as shown in the accompanying drawings, and are only for the purposes of facilitating describing the present invention and simplifying the description, rather than indicating or implying that the referred device or element has to have a specific direction or be constructed and operated in the specific direction, and therefore, they cannot be regarded as limitations on the present invention. In the description of the present invention, "a plurality of" means two or more unless it may be specifically defined otherwise.

The above embodiments merely show several implementations of the present invention, the descriptions thereof are relatively specific and detailed, however, but they cannot be understood as limitations on the patent scope of the present invention. It should be noted that those of ordinary skill in the art may make several variations and improvements without departing from the concept of the present invention, and these variation and improvements fall within the protection scope of the present invention.

## Claims

1. An electric pump for a power battery thermal management system, comprising:
a pump body;
a motor mounted in the pump body;
an impeller (220; 9220) mounted in the pump body and driven by the motor; and
a liquid heating device mounted in the pump body and configured to heat a liquid sucked from a suction inlet (511) and discharged from a discharge outlet (512) by the impeller (220; 9220);
wherein the liquid heating device comprises:
a motor heating component; and
a heating assembly sleeving an outer side of the motor heating component and configured to, when a temperature is lower than a normal working temperature of a battery, perform electrothermal conversion, receive thermal energy generated by the motor, and heat a flowing liquid by thermal energy obtained by electrothermal conversion and the thermal energy generated by the motor; and when the temperature reaches the normal working temperature of the battery, cool the motor by the flowing liquid.

2. The electric pump of claim 1, wherein the liquid heating device further comprises a heating component adjacent to a control assembly of the heating assembly and configured to heat the flowing liquid by thermal energy generated by a high-power device of the control assembly.

3. The electric pump of claim 1 or 2, wherein the motor heating component is a stator assembly of the motor; and
the heating assembly comprises:
an inner heating flow channel sleeve (110; 8110) sleeving an outer side of a stator; and
a tubular heating element (120; 8120) mounted on an outer side of the inner heating flow channel sleeve (110; 8110).

4. The electric pump of claim 3, wherein the inner heating flow channel sleeve (110; 8110; 9110) is provided with an inner heating flow channel space (610) allowing a liquid to flow through; and the inner heating flow channel space (610) is provided with a plurality of spirally-disposed inner spiral partition plates (114) spaced between an inner wall (111) and an outer wall (112) of the inner heating flow channel sleeve and configured to partition the inner heating flow channel space (610) into a plurality of segments of inner spiral heating flow channels (611; 612; 613).

5. The electric pump of claim 3, wherein the heating assembly further comprises an outer heating flow channel sleeve (130) mounted on an outer side of the tubular heating element (120) and provided with an outer heating flow channel space (630), and the outer heating flow channel space (630) is configured to allow a liquid to pass through;
wherein the outer heating flow channel sleeve (130) serves as a part of the pump body to be mounted between a pump cover (510) and a lower pump body (530).

6. The electric pump of claim 5, wherein the outer heating flow channel space (630) is provided with a plurality of spirally-disposed outer spiral partition plates (134) spaced between an inner wall (131) and an outer wall (132) of the outer heating flow channel sleeve (130) and configured to partition the outer heating flow channel space (630) into a plurality of segments of outer spiral heating flow channels (631; 632; 633), wherein spiral directions of the outer spiral heating flow channels (631; 632; 633) are opposite to spiral directions of the inner spiral heating flow channels (611; 612; 613).

7. The electric pump of claim 3, wherein the tubular heating element (120) comprises:
a tubular matrix;
an electric heating film (121) attached to an outer surface (1201) of the tubular matrix; and
thermal conductive insulating glue (1204) covering the electric heating film (121), an outer side of the thermal conductive insulating glue (1204) serving as the outer side of the tubular heating element.

8. The electric pump of claim 3, wherein the pump body comprises an outer pump mantle with a pump cover (8510) and a lower pump body (8530) mounted on a bottom end of the outer pump mantle.

9. The electric pump of claim 8, wherein the inner heating flow channel sleeve (8110) comprises:
a tubular matrix; and
a plurality of inner spiral partition plates (8114) disposed on an outer wall (8111) of the tubular matrix;
wherein outer ends of the plurality of inner spiral partition plates (8114) serve as the outer side of the inner heating flow channel sleeve (8110) to be in contact with an inner wall (1202) of the tubular heating element (8120) so that an inner heating flow channel space (610) allowing a liquid to flow through is formed between the outer wall (8111) of the tubular matrix and the inner wall (1202) of the tubular heating element (8120), and the inner heating flow channel space (610) is provided with a plurality of segments of inner spiral heating flow channels (611; 612; 613) partitioned by the plurality of segments of inner spiral partition plates (8114).

10. The electric pump of claim 9, wherein the heating assembly further comprises an outer heating flow channel sleeve (8130) mounted on an outer side of the tubular heating element (8120) and comprising:
a tubular matrix; and
a plurality of outer spiral partition plates (8134) disposed on an outer wall (8131) of the tubular matrix, outer ends of the plurality of outer spiral partition plates (8134) serving as an outer side of the outer heating flow channel sleeve (8130);
wherein an outer heating flow channel space (630) allowing a liquid to flow through is formed between the outer wall (8131) of the tubular matrix and an inner surface of the outer pump mantle, and the outer heating flow channel space (630) is provided with a plurality of segments of outer spiral heating flow channels (631; 632; 633) partitioned by the plurality of segments of outer spiral partition plates (8134); and
spiral directions of the outer spiral heating flow channels (631; 632; 633) are opposite to spiral directions of the inner spiral heating flow channels (611; 612; 613).

11. The electric pump of claim 8, wherein the tubular heating element (8120) comprises:
a tubular matrix, an inner wall (1202) thereof serving as an inner side of the tubular heating element (8120) to be in contact with the outer side of the inner heating flow channel sleeve (8110); and
an electric heating film (121) attached to an outer surface (1201) of the tubular matrix, the electric heating film (121) being surrounded by the outer heating flow channel sleeve (8130).

12. The electric pump of any one of claims 4 to 11, wherein the plurality of segments of inner spiral heating flow channels (611; 612; 613) and the plurality of segments of outer spiral heating flow channels (631; 632; 633) intercommunicate by a communicating device so that each segment of inner spiral heating flow channel (611; 612; 613) is sequentially connected in series with each segment of outer spiral heating flow channel (631; 632; 633) in a staggered way to prolong a heating duration of a liquid passing through a flow channel.

13. The electric pump of claim 12, wherein the communicating device comprises:
a first reversing-communicating component disposed in the pump cover and configured to communicate a first end of a first segment of inner spiral heating flow channel (611) to the suction inlet (511) disposed in the pump cover, communicate a first end of a last segment of outer spiral heating flow channel (633) to the discharge outlet (512) disposed in the pump cover of the pump, and connect first ends of other segments of inner spiral heating flow channels (612; 613) to first ends of other segments of outer spiral heating flow channels (631; 632) in a staggered way; and a second reversing-communicating component disposed on the lower pump body (530) and configured to connect a second end of each segment of inner spiral heating flow channel (611; 612; 613) to a second end of each segment of outer spiral heating flow channel (631; 632; 633).

14. The electric pump of claim 13, wherein the plurality of segments of inner spiral heating flow channels comprise the first segment of inner spiral heating flow channel (611), a second segment of inner spiral heating flow channel (612) and a third segment of inner spiral heating flow channel (613); the plurality of segments of outer spiral heating flow channels comprise a first segment of outer spiral heating flow channel (631), a second segment of outer spiral heating flow channel (632) and a third segment of outer spiral heating flow channel (633);
the first reversing-communicating component is disposed on an inner wall of the pump cover (510) of the pump body and comprises:
a heating flow channel inlet groove (514) configured to communicate the first end of the first segment of inner spiral heating flow channel (611) to the suction inlet (511) of the pump;
a first reversing groove (691) configured to connect a first end of the second segment of inner spiral heating flow channel (612) to a first end of the first segment of outer spiral heating flow channel (631);
a second reversing groove (692) configured to connect a first end of the third segment of inner spiral heating flow channel (613) to a first end of the second segment of outer spiral heating flow channel (632); and
a heating flow channel outlet groove (515) configured to communicate a first end of the third segment of outer spiral heating flow channel (633) to the discharge outlet (512) of the pump.

15. The electric pump of claim 14, wherein the heating flow channel inlet groove (514) and the heating flow channel outlet groove (515) are located in the same annular area, the heating flow channel inlet groove (514) is located on an inner side of the annular area, and the heating flow channel outlet groove (515) is located on an outer side of the annular area.

16. The electric pump of claim 14, wherein the second reversing-communicating component is disposed on an end of the lower pump body (530) of the pump body and comprises:
a third reversing groove (681) configured to communicate a second end of the first segment of inner spiral heating flow channel (611) to a second end of the first segment of outer spiral heating flow channel (631);
a fourth reversing groove (682) configured to communicate a second end of the second segment of inner spiral heating flow channel (612) to a second end of the second segment of outer spiral heating flow channel (632); and
a fifth reversing groove (683) configured to communicate a second end of the third segment of inner spiral heating flow channel (613) to a second end of the third segment of outer spiral heating flow channel (632).

17. The electric pump of claim 2, wherein the pump body comprises an outer pump mantle with a pump cover (9510) and a lower pump body (9530) mounted on a bottom end of the outer pump mantle.

18. The electric pump of claim 17, wherein the motor heating component is a stator assembly of the motor; and
the heating assembly comprises:
a heating flow channel ring (9110) mounted on an outer side of a stator;
a tubular heating element (9120) mounted on an outer side of the heating flow channel ring (9110); and
a heating flow channel space being formed between the heating flow channel ring (9110) and the tubular heating element (9120);
wherein the tubular heating element (9120) is located in the outer pump mantle and the lower pump body.

19. The electric pump of claim 18, wherein the heating flow channel ring (9110) comprises:
a tubular matrix;
a plurality of annular partition plates (9112) with a gap fixedly disposed on an outer wall of the tubular matrix and configured to partition the heating flow channel space into a plurality of layers of annular heating flow channels (9610) with gaps; and
a longitudinal partition plate (9113) respectively connected to one end of each of the annular partition plates (9112) and configured to enable the gap of each of the annular partition plates (9112) to become a liquid outlet.

20. The electric pump of claim 19, wherein a first layer of annular heating flow channel communicates with a suction inlet (9511) disposed in the pump cover; and a last layer of annular heating flow channel communicates with a discharge outlet (9536) disposed in the lower pump body.

21. An electric pump for a power battery thermal management system, comprising:
a pump body;
a motor mounted in the pump body;
an impeller (220; 9220) mounted in the pump body and driven by the motor; and
a heating assembly mounted in the pump body and configured to heat a liquid sucked from a suction inlet (511) and discharged from a discharge outlet (512) by the impeller (220; 9220);
wherein the heating assembly comprises:
an inner heating flow channel sleeve (110; 8110) sleeving an outer side of a cylindrical stator; and a tubular heating element (120; 8120) mounted on an outer side of the inner heating flow channel sleeve (110; 8110).

22. The electric pump of claim 21, wherein the inner heating flow channel sleeve (110; 8110; 9110) is provided with an inner heating flow channel space (610) allowing a liquid to flow through; and
the inner heating flow channel space (610) is provided with a plurality of spirally-disposed inner spiral partition plates (114) spaced between an inner wall (111) and an outer wall (112) of the inner heating flow channel sleeve and configured to partition the inner heating flow channel space (610) into a plurality of segments of inner spiral heating flow channels (611; 612; 613).

23. The electric pump of claim 21, wherein the heating assembly further comprises an outer heating flow channel sleeve (130) mounted on an outer side of the tubular heating element (120) and provided with an outer heating flow channel space (630), and the outer heating flow channel space (630) is configured to allow a liquid to pass through;
wherein the outer heating flow channel sleeve (130) serves as a part of the pump body to be mounted between a pump cover (510) and a lower pump body (530).

24. The electric pump of claim 23, wherein the outer heating flow channel space (630) is provided with a plurality of spirally-disposed outer spiral partition plates (134) spaced between an inner wall (131) and an outer wall (132) of the outer heating flow channel sleeve (130) and configured to partition the outer heating flow channel space (630) into a plurality of segments of outer spiral heating flow channels (631; 632; 633), wherein spiral directions of the outer spiral heating flow channels (631; 632; 633) are opposite to spiral directions of the inner spiral heating flow channels (611; 612; 613).

25. The electric pump of claim 21, wherein the tubular heating element (120) comprises:
a tubular matrix;
an electric heating film (121) attached to an outer surface (1201) of the tubular matrix; and
thermal conductive insulating glue (1204) covering the electric heating film (121), an outer side of the thermal conductive insulating glue (1204) serving as the outer side of the tubular heating element.

26. The electric pump of claim 21, wherein the pump body comprises an outer pump mantle with a pump cover (8510) and a lower pump body (8530) mounted on a bottom end of the outer pump mantle.

27. The electric pump of claim 26, wherein the inner heating flow channel sleeve (8110) comprises:
a tubular matrix; and
a plurality of inner spiral partition plates (8114) disposed on an outer wall (8111) of the tubular matrix;
wherein outer ends of the plurality of inner spiral partition plates (8114) serve as the outer side of the inner heating flow channel sleeve (8110) to be in contact with an inner wall (1202) of the tubular heating element (8120) so that an inner heating flow channel space (610) allowing a liquid to flow through is formed between the outer wall (8111) of the tubular matrix and the inner wall (1202) of the tubular heating element (8120), and the inner heating flow channel space (610) is provided with a plurality of segments of inner spiral heating flow channels (611; 612; 613) partitioned by the plurality of segments of inner spiral partition plates (8114).

28. The electric pump of claim 27, wherein the heating assembly further comprises an outer heating flow channel sleeve (8130) mounted on an outer side of the tubular heating element (8120) and comprising:
a tubular matrix; and
a plurality of outer spiral partition plates (8134) disposed on an outer wall (8131) of the tubular matrix, outer ends of the plurality of outer spiral partition plates (8134) serving as an outer side of the outer heating flow channel sleeve (8130);
wherein an outer heating flow channel space (630) allowing a liquid to flow through is formed between the outer wall (8131) of the tubular matrix and an inner surface of the outer pump mantle, and the outer heating flow channel space (630) is provided with a plurality of segments of outer spiral heating flow channels (631; 632; 633) partitioned by the plurality of segments of outer spiral partition plates (8134); and
spiral directions of the outer spiral heating flow channels (631; 632; 633) are opposite to spiral directions of the inner spiral heating flow channels (611; 612; 613).

29. The electric pump of claim 26, wherein the tubular heating element (8120) comprises:
a tubular matrix, an inner wall (1202) thereof serving as an inner side of the tubular heating element (8120) to be in contact with the outer side of the inner heating flow channel sleeve (8110); and
an electric heating film (121) attached to an outer surface (1201) of the tubular matrix, the electric heating film (121) being surrounded by the outer heating flow channel sleeve (8130).

30. The electric pump of any one of claims 22 to 29, wherein the plurality of segments of inner spiral heating flow channels (611; 612; 613) and the plurality of segments of outer spiral heating flow channels (631; 632; 633) intercommunicate by a communicating device so that each segment of inner spiral heating flow channel (611; 612; 613) is sequentially connected in series with each segment of outer spiral heating flow channel (631; 632; 633) in a staggered way to prolong a heating duration of a liquid passing through a flow channel.

31. The electric pump of claim 30, wherein the communicating device comprises:
a first reversing-communicating component disposed in the pump cover and configured to communicate a first end of a first segment of inner spiral heating flow channel (611) to the suction inlet (511) disposed in the pump cover, communicate a first end of a last segment of outer spiral heating flow channel (633) to the discharge outlet (512) disposed in the pump cover, and connect first ends of other segments of inner spiral heating flow channels (612; 613) to first ends of other segments of outer spiral heating flow channels (631; 632) in a staggered way; and
a second reversing-communicating component disposed on the lower pump body (530) and configured to connect a second end of each segment of inner spiral heating flow channel (611; 612; 613) to a second end of each segment of outer spiral heating flow channel (631; 632; 633).

32. The electric pump of claim 31, wherein the plurality of segments of inner spiral heating flow channels comprise the first segment of inner spiral heating flow channel (611), a second segment of inner spiral heating flow channel (612) and a third segment of inner spiral heating flow channel (613); the plurality of segments of outer spiral heating flow channels comprise a first segment of outer spiral heating flow channel (631), a second segment of outer spiral heating flow channel (632) and a third segment of outer spiral heating flow channel (633);
the first reversing-communicating component is disposed on an inner wall of the pump cover (510) of the pump body and comprises:
a heating flow channel inlet groove (514) configured to communicate the first end of the first segment of inner spiral heating flow channel (611) to the suction inlet (511) of the pump;
a first reversing groove (691) configured to connect a first end of the second segment of inner spiral heating flow channel (612) to a first end of the first segment of outer spiral heating flow channel (631);
a second reversing groove (692) configured to connect a first end of the third segment of inner spiral heating flow channel (613) to a first end of the second segment of outer spiral heating flow channel (632); and
a heating flow channel outlet groove (515) configured to communicate a first end of the third segment of outer spiral heating flow channel (633) to the discharge outlet (512) of the pump.

33. The electric pump of claim 32, wherein the heating flow channel inlet groove (514) and the heating flow channel outlet groove (515) are located in the same annular area, the heating flow channel inlet groove (514) is located on an inner side of the annular area, and the heating flow channel outlet groove (515) is located on an outer side of the annular area.

34. The electric pump of claim 33, wherein the second reversing-communicating component is disposed on an end of the lower pump body (530) of the pump body and comprises:
a third reversing groove (681) configured to communicate a second end of the first segment of inner spiral heating flow channel (611) to a second end of the first segment of outer spiral heating flow channel (631);
a fourth reversing groove (682) configured to communicate a second end of the second segment of inner spiral heating flow channel (612) to a second end of the second segment of outer spiral heating flow channel (632); and
a fifth reversing groove (683) configured to communicate a second end of the third segment of inner spiral heating flow channel (613) to a second end of the third segment of outer spiral heating flow channel (632).

35. An electric pump for a power battery thermal management system, comprising:
a pump body;
a motor mounted in the pump body;
an impeller (220; 9220) mounted in the pump body and driven by the motor; and
a heating assembly mounted in the pump body and configured to heat a liquid sucked from a suction inlet (511) and discharged from a discharge outlet (512) by the impeller (220; 9220);
the pump body comprising an outer pump mantle with a pump cover (9510) and a lower pump body (9530) mounted on a bottom end of the outer pump mantle.

36. The electric pump of claim 35, wherein the heating assembly comprises:
a heating flow channel ring (9110) mounted on an outer side of a stator; and
a tubular heating element (9120) mounted on an outer side of the heating flow channel ring (9110);
a heating flow channel space being formed between the heating flow channel ring (9110) and the tubular heating element (9120);
wherein the tubular heating element (9120) is located in the outer pump mantle and the lower pump body (9530).

37. The electric pump of claim 36, wherein the heating flow channel ring (9110) comprises:
a tubular matrix;
a plurality of annular partition plates (9112) with a gap fixedly disposed on an outer wall of the tubular matrix and configured to partition the heating flow channel space into a plurality of layers of annular heating flow channels (9610) with gaps; and
a longitudinal partition plate (9113) respectively connected to one end of each of the annular partition plates (9112) and configured to enable the gap of each of the annular partition plates (9112) to become a liquid outlet.

38. The electric pump of claim 37, wherein a first layer of annular heating flow channel communicates with a suction inlet (9511) disposed in the pump cover; and a last layer of annular heating flow channel communicates with a discharge outlet (9536) disposed in the lower pump body.
